(19) Europäisches Patentamt / European Patent Office / Office européen des brevets

(11) **EP 3 319 311 B1**

(12) **FASCICULE DE BREVET EUROPEEN**

(45) Date de publication et mention
de la délivrance du brevet:
**23.10.2019 Bulletin 2019/43**

(51) Int Cl.:
*H04N 5/3745* (2011.01)     *H04N 5/355* (2011.01)

(21) Numéro de dépôt: **17184823.7**

(22) Date de dépôt: **03.08.2017**

(54) **CAPTEUR D'IMAGES SYNCHRONE À CODAGE TEMPOREL**

SYNCHRONBILDSENSOR MIT ZEITKODIERUNG

SYNCHRONOUS IMAGE SENSOR WITH TIME CODING

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **03.11.2016 FR 1660627**

(43) Date de publication de la demande:
**09.05.2018 Bulletin 2018/19**

(73) Titulaire: **Commissariat à l'Energie Atomique et
aux Energies
Alternatives
75015 Paris (FR)**

(72) Inventeurs:
• **VERDANT, Arnaud**
  **38330 SAINT-NAZAIRE-LES-EYMES (FR)**
• **GUICQUERO, William**
  **91440 BURES-SUR-YVETTE (FR)**

(74) Mandataire: **Cabinet Beaumont
4, Place Robert Schuman
B.P. 1529
38025 Grenoble Cedex 1 (FR)**

(56) Documents cités:
EP-A2- 1 052 846     US-A1- 2004 174 754
US-B1- 6 977 685

**Description**

Domaine

La présente demande concerne le domaine des capteurs d'images de façon générale. Elle concerne plus particulièrement un capteur d'images synchrone adapté à mettre en oeuvre un codage temporel des niveaux de luminosité détectés.

Exposé de l'art antérieur

De façon classique, un capteur d'images comprend une pluralité de cellules élémentaires ou pixels identiques ou similaires, par exemple agencés en matrice selon des lignes et des colonnes. Chaque pixel comprend un photodétecteur, par exemple une photodiode polarisée en inverse dont la capacité de jonction est déchargée par un photocourant en fonction d'une intensité lumineuse reçue. Chaque pixel comprend en outre un circuit de contrôle et de lecture, adapté à fournir un signal de sortie représentatif de la quantité d'énergie lumineuse reçue par son photodétecteur pendant une période d'intégration.

Traditionnellement, lors d'une phase d'acquisition d'une image, chaque pixel est d'abord réinitialisé, puis une phase d'intégration du pixel de durée prédéfinie est mise en oeuvre. Pendant la phase d'intégration, un signal analogique représentatif de l'intensité lumineuse reçue par le photodétecteur du pixel est intégré au sein du pixel. A la fin de la phase d'intégration, le signal intégré est numérisé par un circuit de conversion analogique-numérique externe au pixel, et définit la valeur de sortie du pixel.

Un inconvénient des capteurs d'images traditionnels réside dans la complexité et dans la consommation électrique relativement importantes du ou des circuits de conversion analogique-numérique (généralement un par colonne de pixels du capteur) disposés à la périphérie de la matrice de pixels.

L'article intitulé "Pixel-level A/D conversion: comparison of two charge packets counting techniques", de A. Peizerat et al., décrit un capteur d'images dans lequel chaque pixel comprend un convertisseur analogique-numérique de type sigma-delta. Lors d'une phase d'acquisition d'une image, chaque pixel est d'abord réinitialisé, puis une phase d'intégration du pixel de durée prédéfinie est mise en oeuvre. Pendant la phase d'intégration, un courant représentatif de l'intensité lumineuse reçue par le photodétecteur du pixel est intégré dans une capacité (ou intégrateur analogique) du pixel. La tension aux bornes de la capacité d'intégration du pixel est comparée en continu (de façon asynchrone) à un seuil de référence par un comparateur interne au pixel. A chaque fois que cette tension atteint le seuil de commutation du comparateur, un compteur (ou intégrateur numérique) interne au pixel est incrémenté, et la capacité d'intégration du pixel est réinitialisée. A la fin de la phase d'intégration, la valeur du compteur est lue par un circuit externe au pixel et définit la valeur de sortie du pixel.

Un inconvénient de cette solution réside dans la surface importante occupée, dans chaque pixel, par le circuit de conversion analogique numérique du pixel, et en particulier par l'intégrateur numérique interne au pixel.

L'article intitulé "Low-Power, High Dynamic Range CMOS Image Sensor Employing Pixel-level Oversampling $\Sigma\Delta$ Analog-to-Digital Conversion", de Z. Ignjatovic et al., décrit un capteur d'images mettant en oeuvre une conversion analogique-numérique de type sigma-delta à l'extérieur de la matrice de pixels. Lors d'une phase d'acquisition d'une image, chaque pixel est d'abord réinitialisé, puis une phase d'intégration du pixel de durée prédéfinie est mise en oeuvre. Pendant la phase d'intégration, un courant représentatif de l'intensité lumineuse reçue par le photodétecteur du pixel est intégré sur un noeud capacitif de lecture du pixel. Le potentiel du noeud de lecture est périodiquement échantillonné et quantifié sur un bit par un comparateur situé à l'extérieur du pixel. A chaque fois que le comparateur commute, c'est-à-dire à chaque fois que le potentiel du noeud de lecture a atteint le seuil du comparateur, le noeud de lecture du pixel est réinitialisé. Le signal binaire de sortie du comparateur est intégré par un intégrateur numérique externe au pixel. A la fin de la phase d'intégration, la valeur numérique intégrée définit la valeur de sortie du pixel.

Un inconvénient de cette solution est que, du fait du fonctionnement synchrone du comparateur, les réinitialisations successives du pixel pendant la phase d'intégration doivent être réalisées non pas en tension mais en charges, c'est-à-dire par injection d'une quantité de charges prédéterminée sur le noeud de lecture du pixel. Pour cela, chaque pixel comprend un circuit de réinitialisation spécifique à trois transistors, ce qui augmente l'encombrement global du pixel.

Le document US6977685 B1 décrit un capteur d'images comprenant un circuit de commande configuré pour sélectionner successivement plusieurs fois un pixel au cours d'une même phase d'intégration, et ceci chaque fois que la valeur du pixel dépasse un seuil de quantification correspondant au niveau de saturation, le pixel en question est alors réinitialisé pour permettre de continuer d'accumuler pendant le reste de la dite phase d'intégration ; ainsi il est possible d'augmenter la plage dynamique des images capturées.

Un objet d'un mode de réalisation est de prévoir un capteur d'images palliant tout ou partie des inconvénients susmentionnés.

Résumé

Ainsi, un mode de réalisation prévoit un capteur d'images comportant :

-    une pluralité de pixels, chaque pixel étant adapté à fournir un signal de sortie représentatif d'une quantité d'énergie lumineuse reçue depuis un instant de début d'une phase d'intégration du pixel ; et

- un circuit de commande configuré pour, lors d'une phase d'acquisition d'une image, sélectionner successivement chaque pixel un nombre n de fois au cours d'une même phase d'intégration du pixel, sans réinitialiser le pixel entre la première et la dernière sélection du pixel, et, à chaque sélection d'un pixel, comparer le signal de sortie du pixel à un seuil de quantification et lire un signal binaire représentatif du résultat de la comparaison.

Selon un mode de réalisation, le circuit de commande est configuré pour que l'intervalle de temps entre deux sélections successives du pixel soit sensiblement constant tout au long de la phase d'intégration du pixel.

Selon un mode de réalisation, le circuit de commande est configuré pour que l'intervalle de temps entre deux sélections successives du pixel varie au cours de la phase d'intégration du pixel.

Selon un mode de réalisation, le circuit de commande est configuré pour que l'intervalle de temps entre deux sélections successives du pixel soit inversement proportionnel au rang de la première des deux sélections parmi les n sélections successives du pixel de la phase d'intégration.

Selon un mode de réalisation, chaque pixel comprend :

une photodiode ;
une région capacitive de lecture ;
un transistor de réinitialisation reliant la région capacitive de lecture à un noeud de réinitialisation du pixel ;
un transistor de lecture monté en source suiveuse, dont la grille est connectée à la région capacitive de lecture et dont le drain est connecté au noeud de réinitialisation ; et
un transistor de sélection reliant la source du transistor de lecture à une piste conductrice de sortie du pixel.

Selon un mode de réalisation, le circuit de commande est configuré pour, lors d'une phase d'acquisition d'une image, mettre en oeuvre, pour chaque pixel, une phase d'initialisation du pixel comprenant la réinitialisation de la région capacitive de lecture du pixel à une première tension de référence par l'intermédiaire de la piste conductrice de sortie, du transistor de sélection, du transistor de lecture et du transistor de réinitialisation du pixel.

Selon un mode de réalisation, le circuit de commande est configuré pour, lors de la phase d'initialisation d'un pixel, configurer le pixel en amplificateur à source commune en appliquant un courant de polarisation sur le noeud de réinitialisation du pixel et en appliquant un potentiel de référence fixe sur la piste conductrice de sortie du pixel.

Selon un mode de réalisation, le circuit de commande est configuré pour, lors de la phase d'initialisation d'un pixel, mettre en oeuvre les étapes successives suivantes :

initialiser à un potentiel de référence la piste conductrice de sortie du pixel puis mettre à un état de haute impédance ladite piste conductrice de sortie ;
commander le transistor de réinitialisation et le transistor de sélection à l'état passant ; et
mettre à un état de haute impédance le noeud de réinitialisation du pixel et forcer la piste conductrice de sortie du pixel au potentiel de référence.

Selon un mode de réalisation, chaque pixel comprend en outre une grille de transfert adaptée à contrôler le transfert des charges photogénérées entre sa photodiode et sa région de lecture.

Selon un mode de réalisation, le circuit de commande comprend un circuit périphérique de lecture comportant au moins un comparateur, et chaque pixel a sa piste conductrice de sortie connectée à une première entrée dudit au moins un comparateur.

Selon un mode de réalisation, le circuit de commande est configuré pour, à chaque sélection d'un pixel lors d'une phase d'intégration du pixel, mettre en oeuvre les étapes suivantes :

a) précharger la piste conductrice de sortie du pixel à une deuxième tension de référence ;
b) appliquer une troisième tension de référence supérieure à la deuxième tension de référence sur une deuxième entrée dudit au moins un comparateur ;
c) fermer le transistor de sélection du pixel ; et
d) après un temps d'établissement prédéterminé après l'étape c), lire la valeur de sortie du comparateur.

Selon un mode de réalisation, les pixels sont agencés en matrice selon des lignes et des colonnes, et le circuit de commande est adapté à commander simultanément les pixels d'une même ligne et à commander successivement les pixels de lignes distinctes selon un procédé de commande de type à obturation déroulante.

Selon un mode de réalisation, le seuil de quantification est ajustable.

Un autre mode de réalisation prévoit un dispositif comportant un capteur tel que défini ci-dessus, et un circuit de traitement à la volée des signaux binaires lus par le circuit de commande du capteur.

Selon un mode de réalisation, le circuit de traitement est adapté, à chaque balayage de l'ensemble des pixels du capteur, à multiplier un vecteur d'entrée binaire formé par l'ensemble des signaux binaires lus par le circuit de commande du capteur pour les différents pixels du capteur, par une matrice de passage.

Selon un mode de réalisation, le circuit de traitement est adapté, lors de balayages successifs de l'ensemble des pixels du capteur, à intégrer des vecteurs de sortie successifs résultant de la multiplication des vecteurs d'entrée successifs par la matrice de passage.

## Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :

les figures 1, 2A, 2B et 2C sont des chronogrammes illustrant de façon schématique le fonctionnement d'un capteur d'images selon un premier mode de réalisation ;
la figure 3 est un schéma électrique d'un exemple de pixel d'un capteur d'images selon le premier mode de réalisation ;
la figure 4 est un chronogramme illustrant de façon schématique un exemple de procédé de commande du pixel de la figure 3 selon le premier mode de réalisation ;
les figures 5A, 5B et 5C illustrent schématiquement le comportement du pixel de la figure 3 lors d'une phase d'initialisation du procédé de commande de la figure 4 ;
la figure 6 est un chronogramme illustrant de façon schématique un autre exemple de procédé de commande du pixel de la figure 3 selon le premier mode de réalisation ;
la figure 7 illustre de façon schématique et partielle un exemple d'un circuit périphérique de lecture d'un capteur d'images selon le premier mode de réalisation ;
la figure 8 est un chronogramme illustrant de façon schématique le fonctionnement du circuit périphérique de lecture de la figure 7 ;
la figure 9 illustre un exemple de méthode de traitement de données de sortie d'un capteur d'images ;
la figure 10 illustre un exemple de méthode de traitement de données de sortie d'un capteur d'images selon le premier mode de réalisation ;
la figure 11 est un chronogramme illustrant de façon schématique le fonctionnement d'un capteur d'images selon un deuxième mode de réalisation ;
les figures 12 et 13 sont des chronogrammes illustrant plus en détail un exemple d'un mode de fonctionnement d'un capteur d'images selon le deuxième mode de réalisation ; et
la figure 14 est un chronogramme illustrant plus en détail un autre exemple d'un mode de fonctionnement d'un capteur d'images selon le deuxième mode de réalisation.

## Description détaillée

De mêmes éléments ont été désignés par de mêmes références aux différentes figures et, de plus, les diverses figures ne sont pas tracées à l'échelle. Par souci de clarté, seuls les éléments qui sont utiles à la compréhension des modes de réalisation décrits ont été représentés et sont détaillés. En particulier, les circuits périphériques de commande des capteurs d'images décrits n'ont pas été détaillés, la réalisation de tels circuits étant à la portée de l'homme du métier à partir des indications fonctionnelles décrites. Sauf précision contraire, les expressions "approximativement", "sensiblement", et "de l'ordre de" signifient à 10 % près, de préférence à 5 % près. Par ailleurs, on utilise le terme "connecté" pour désigner une liaison électrique directe, sans composant électronique intermédiaire, par exemple au moyen d'une ou plusieurs pistes conductrices ou fils conducteurs, et le terme "couplé" ou le terme "relié", pour désigner une liaison électrique qui peut être directe (signifiant alors "connecté") ou indirecte (c'est-à-dire via un ou plusieurs composants intermédiaires).

Selon un aspect d'un mode de réalisation, on prévoit un capteur comportant une pluralité de pixels identiques ou similaires, chaque pixel comprenant un photodétecteur, par exemple une photodiode, et un circuit de contrôle et de lecture adapté à intégrer, sur un noeud capacitif de lecture du pixel, un photocourant représentatif du flux lumineux reçu par le photodétecteur du pixel. Le fonctionnement du capteur est le suivant. Lors d'une phase d'acquisition d'une image, chaque pixel est d'abord réinitialisé, puis une phase d'intégration de durée prédéfinie est mise en oeuvre. Pendant la phase d'intégration, la tension sur le noeud de lecture du pixel décroît en fonction de la quantité d'énergie lumineuse reçue par le pixel depuis le début de la phase d'intégration. Cette tension est successivement échantillonnée et quantifiée sur un bit une pluralité de fois de façon synchrone, par exemple périodiquement, par un circuit périphérique de lecture externe au pixel. Le signal binaire résultant peut être mémorisé et/ou intégré dans un intégrateur numérique externe au pixel, par exemple un compteur numérique. Selon un aspect d'un mode de réalisation, le pixel n'est pas réinitialisé pendant toute la durée de la période d'intégration, ce qui constitue une différence par rapport au mode de fonctionnement décrit dans l'article susmentionné de Z. Ignjatovic et al., dans lequel le pixel est réinitialisé à chaque fois que sa tension de sortie dépasse le seuil de quantification.

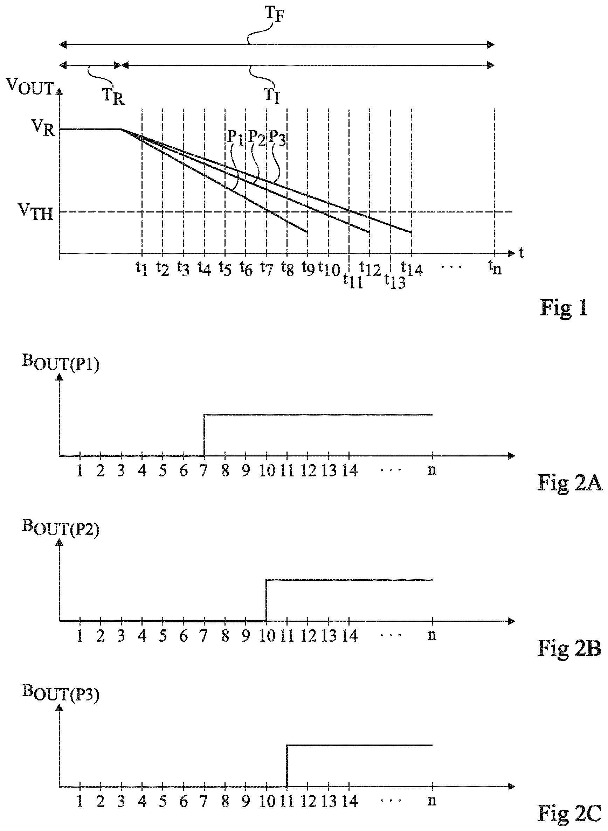

Les figures 1, 2A, 2B et 2C sont des chronogrammes illustrant de façon schématique le fonctionnement d'un capteur d'images selon un exemple d'un mode de réalisation.

La figure 1 représente l'évolution en fonction du temps, pour trois pixels distincts $P_1$, $P_2$, $P_3$ du capteur, de la tension de sortie $V_{OUT}$ du pixel (c'est-à-dire la tension sur le noeud capacitif de lecture du pixel) lors d'une phase $T_F$ d'acquisition d'une image.

Lors de la phase d'acquisition $T_F$, chaque pixel est d'abord réinitialisé pendant une phase d'initialisation $T_R$. Lors de la phase d'initialisation $T_R$, la tension de sortie du pixel est initialisée à une valeur $V_R$. Une phase d'intégration du pixel $T_I$ de durée prédéfinie est ensuite mise en oeuvre. Pendant la phase d'intégration $T_I$, la tension de sortie $V_{OUT}$ du pixel décroît à une vitesse fonction de l'intensité lumineuse reçue par le pixel. Pendant la phase d'intégration $T_I$, le pixel est lu une pluralité de fois à des instants prédéterminés $t_1$, ... $t_n$, où n est un entier désignant le nombre de lectures successives du pixel lors de la phase d'intégration $T_I$, par exemple supérieur ou égal à 4. Dans l'exemple représenté, le pixel est lu périodiquement à une fréquence de l'ordre de $n/T_I$ pendant toute la durée de la phase d'intégration $T_I$.

A chaque lecture du pixel, la tension de sortie $V_{OUT}$ du pixel est quantifiée sur 1 bit. Pour cela, la tension de sortie $V_{OUT}$ du pixel est comparée à un seuil prédéfini $V_{TH}$ par un comparateur externe au pixel, et le résultat de la comparaison est mémorisé. A la fin de la phase d'intégration $T_I$, la suite de n échantillons binaires obtenue définit la valeur de sortie du pixel.

Les figures 2A, 2B et 2C représentent respectivement, pour les pixels $P_1$, $P_2$ et $P_3$, la séquence des n bits de sortie $B_{OUT}$ du quantificateur acquise pendant la période d'intégration $T_I$.

Comme cela apparaît sur les figures, tant que la tension de sortie $V_{OUT}$ du pixel est supérieure au seuil $V_{TH}$, le signal binaire de sortie du pixel est à un premier état (état bas dans l'exemple représenté). Lorsque la tension de sortie $V_{OUT}$ du pixel franchit le seuil $V_{TH}$, le signal binaire de sortie du pixel passe à un deuxième état (état haut dans l'exemple représenté). Les pixels n'étant pas réinitialisés pendant toute la durée de la phase d'intégration $T_I$, le signal binaire de sortie du pixel reste ensuite au deuxième état jusqu'à la fin de la phase d'intégration $T_I$.

La position du front de transition entre l'état bas et l'état haut dans la séquence binaire de sortie du pixel est représentative de l'intensité lumineuse reçue par le pixel pendant la phase d'intégration $T_I$. Plus le pixel est fortement éclairé, plus le front de transition intervient tôt dans la séquence binaire de sortie du pixel, et inversement.

A titre d'exemple, les n valeurs de la séquence binaire de sortie du pixel peuvent être intégrées numériquement pour fournir une valeur de sortie du pixel codée sur un nombre de bits inférieur à n. A titre d'exemple, les n bits de sortie du quantificateur peuvent être additionnés pour générer une valeur de sortie du pixel sur $\log_2(n)$ bits. Il y a ainsi une équivalence entre une représentation binaire de l'image selon le codage présenté et une représentation en nombre entier de cette même image. Ainsi, tout traitement pouvant être effectué sur une représentation en nombre entier d'une image peut être transposé sur une représentation binaire de l'image. L'intégration numérique des bits de sortie du quantificateur est par exemple réalisée à la volée par un compteur numérique externe au pixel incrémentant une valeur numérique de sortie du pixel à chaque fois que le quantificateur génère un bit à l'état haut pour le pixel.

Le mode de fonctionnement décrit en relation avec les figures 1, 2A, 2B et 2C permet de réaliser un codage temporel des valeurs de sortie des pixels. En effet, la valeur de sortie d'un pixel est représentative du temps mis par le pixel pour atteindre le seuil de quantification $V_{TH}$. On peut ainsi réaliser un codage numérique des valeurs de sortie des pixels inversement proportionnel à l'intensité du flux lumineux reçu par les pixels, si l'intervalle de temps séparant deux lectures successives d'un pixel reste constante pendant toute la durée de la phase d'intégration. En effet, si on considère un pixel comportant une photodiode de capacité C, et dont la tension de sortie $V_{OUT}$ correspond à la tension aux bornes de la photodiode, la tension $V_{OUT}$ évolue en fonction du temps t proportionnellement à un photocourant $i_{ph}$ traversant la photodiode selon la relation suivante :

$$V_{OUT} = V_R - (i_{ph}/C) * t$$

Le temps $t2V_{TH}$ mis par le pixel pout atteindre le seuil $V_{TH}$ s'exprime alors par la relation suivante :

$$t2V_{TH} = (V_R - V_{TH}) * C / i_{ph}$$

Un avantage du mode de fonctionnement décrit en relation avec les figures 1, 2A, 2B et 2C est qu'il est compatible avec des structures de pixels traditionnelles. En particulier, à la différence de la solution décrite dans l'article susmentionné de Z. Ignjatovic et al., il n'est pas nécessaire d'ajouter des circuits de réinitialisation spécifiques aux pixels dans la mesure où les pixels ne sont pas réinitialisés pendant la période d'intégration $T_I$.

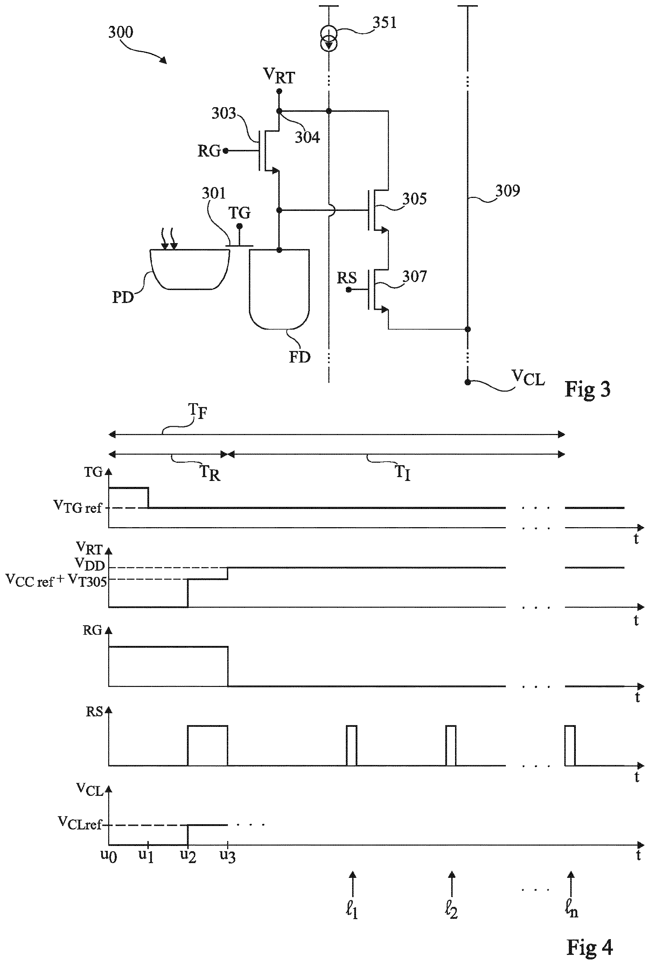

La figure 3 est un schéma électrique d'un exemple de pixel 300 d'un capteur d'images selon un mode de réalisation.

Le pixel 300 de la figure 3 est un pixel de type 4T, c'est-à-dire comportant une photodiode et quatre transistors de contrôle. Le pixel 300 comprend une photodiode PD, par exemple une photodiode pincée, comprenant notamment une région semiconductrice d'accumulation de charges photogénérées. Le pixel 300 comprend en outre une région de lecture FD formée dans le même substrat semiconducteur que la photodiode PD. Le pixel 300 comprend de plus une grille de transfert 301 (ou transistor de transfert) connectée à un noeud d'application d'une tension de commande TG, permettant de contrôler le transfert des charges photogénérées de la région d'accumulation de la photodiode PD vers la région de lecture FD. Le pixel 300 comprend en outre un transistor de réinitialisation 303 reliant la région de lecture FD à un noeud 304 d'application d'un potentiel de réinitialisation $V_{RT}$. Dans l'exemple représenté, le transistor 303 est un transistor MOS à canal N dont la source est connectée à la région de lecture FD et dont le drain est connecté au noeud 304. La grille du transistor 303 est connectée à un noeud d'application d'une tension de commande RG. Le pixel 300 comprend en outre un transistor de lecture 305 monté en suiveur de tension, dont la grille est connectée ou couplée à la région de lecture FD. Dans l'exemple représenté, le transistor 305 est un transistor MOS à canal N et a son drain connecté au noeud 304. Le pixel 300 comprend de plus un transistor de sélection 307 reliant la source du transistor de lecture 305 à une piste conductrice de sortie 309. Dans l'exemple représenté, le transistor 307 est un transistor MOS à canal N dont le drain est connecté à la source du transistor 305 et dont la source est connectée à la piste de sortie 309. La grille du transistor 307 est connectée à un noeud d'application d'une tension de commande RS.

A titre d'exemple, un capteur selon un mode de réalisation comporte une pluralité de pixels identiques ou similaires au pixel 300 de la figure 3, agencés en matrice selon des lignes et des colonnes. Les pixels du capteur sont par exemple commandables simultanément ligne par ligne. Pour cela, les pixels d'une même ligne ont leurs noeuds TG respectifs connectés à une même piste conductrice de commande, et les pixels de lignes distinctes ont leurs noeuds TG respectifs connectés à des pistes conductrices de commande distinctes. De plus, les pixels d'une même ligne ont leurs noeuds RG respectifs connectés à une même piste conductrice de commande, et les pixels de lignes distinctes ont leurs noeuds RG respectifs connectés à des pistes conductrices de commande distinctes. De plus, les pixels d'une même ligne ont leurs noeuds RS respectifs connectés à une même piste conductrice de commande, et les pixels de lignes distinctes ont leurs noeuds RS respectifs connectés à des pistes conductrices de commande distinctes. De plus, les pixels d'une même colonne ont leurs noeuds 304 respectifs connectés à une même piste conductrice de polarisation, et les pixels de colonnes distinctes ont leurs noeuds 304 respectifs connectés à des pistes conductrices de polarisation distinctes. En outre, les pixels d'une même colonne sont connectés à une même piste conductrice de sortie 309, et les pixels de colonnes distinctes sont connectés à des pistes conductrices de sortie 309 distinctes.

La figure 4 est un chronogramme illustrant de façon schématique un exemple d'un procédé de commande d'un capteur du type décrit en relation avec la figure 3. La figure 4 illustre plus particulièrement l'évolution des signaux de commande TG, RG et RS, ainsi que du potentiel $V_{RT}$, appliqués aux pixels 300 d'une même ligne du capteur lors d'une phase $T_F$ d'acquisition d'une image. La figure 4 illustre en outre l'évolution d'un potentiel $V_{CL}$ appliqué sur les pistes conductrices de sortie 309 des pixels de la ligne lors de la phase d'acquisition $T_F$. La séquence de commande décrite en relation avec la figure 4 peut être répétée sensiblement à l'identique pour chaque ligne de pixels du capteur avec un décalage temporel entre deux lignes successives sensiblement égal à la durée $T_L$ de mise en oeuvre d'une lecture d'un pixel (commande de type "rolling shutter" ou à obturation déroulante).

A un instant $u_0$ de début de la phase d'acquisition $T_F$, les transistors de réinitialisation 303 et les transistors de transfert 301 des pixels de la ligne sont commandés à l'état passant. Pour cela, les signaux TG et RG sont mis à un niveau haut. Le potentiel $V_{RT}$ est quant à lui mis à un niveau bas, par exemple à la masse. Ceci conduit à remplir d'électrons la photodiode PD et la région de lecture FD de chaque pixel de la ligne, ainsi que la zone de transfert entre la photodiode PD et la région de lecture FD du pixel. Lors de cette étape, le transistor de sélection 307 du pixel est maintenu bloqué. Pour cela le signal RS est maintenu à un niveau bas.

A un instant $u_1$ postérieur à l'instant $u_0$, le signal TG est mis à un niveau $V_{TGref}$ intermédiaire entre un niveau bas, pour lequel le transistor de transfert 301 est bloqué, et le niveau haut, pour lequel le transistor de transfert 301 est pleinement passant. Le niveau $V_{TGref}$ est inférieur à la tension de pincement de la photodiode, c'est-à-dire que le transfert des électrons entre la photodiode PD et la région de lecture FD n'est pas bloqué, mais que les électrons doivent franchir une barrière de potentiel pour passer de la photodiode PD vers la région de lecture FD. Autrement dit, des électrons photogénérés ne peuvent passer de la photodiode PD vers la région de lecture que lorsque le potentiel de la région d'accumulation de la photodiode PD descend en dessous d'un seuil fixé par la valeur $V_{TGref}$.

A un instant $u_2$ postérieur à l'instant $u_1$, chaque pixel de la ligne est configuré en amplificateur à source commune. Pour cela, un courant de polarisation est appliqué sur la piste conductrice interconnectant les noeuds 304 des pixels de la colonne, par une source de courant commandable 351 (figure 3) disposée à l'extérieur du pixel, par exemple en tête de colonne. Lors de cette étape, le potentiel $V_{CL}$ de la piste conductrice de sortie 309 du pixel est maintenu à une valeur positive $V_{CLref}$ par un circuit périphérique de commande (non représenté) externe au pixel. De plus, le transistor de sélection 307 est commandé à l'état passant. Pour cela, le signal RS est mis à un niveau haut. Le transistor de réinitialisation 303 est quant à lui maintenu passant (RG à l'état haut). On obtient ainsi un montage d'amplificateur en contre réaction. Le potentiel sur le noeud 304, qui fixe le potentiel d'initialisation de la région de lecture FD, s'établit à une valeur sensiblement égale à $V_{CLref} + V_{T305}$, où $V_{T305}$ désigne la tension de seuil du transistor suiveur 305. Le potentiel dans la région d'accumulation de la photodiode PD s'établit quant à lui sensiblement à la limite de la barrière de potentiel fixée par la valeur $V_{TGref}$, étant entendu que la valeur $V_{CLref}$ est choisie telle que la valeur $V_{CLref}+V_{T305}$ soit supérieure à la barrière de potentiel fixée par la valeur $V_{TGref}$.

A un instant $u_3$ postérieur à l'instant $u_2$, le transistor 303 est bloqué. Pour cela, le signal RG est mis à un niveau bas. De plus, le potentiel $V_{RT}$ appliqué sur le noeud 304 est mis à un niveau haut de référence, par exemple un potentiel d'alimentation haut $V_{DD}$ du capteur. Le signal TG est quant à lui maintenu à la valeur intermédiaire $V_{TGref}$, n'introduisant ainsi aucune perturbation par couplage capacitif entre le noeud FD et la grille 301. A l'instant $u_3$, le transistor 307 est en outre bloqué. Pour cela, le signal RS est mis à un niveau bas.

L'instant $u_3$ marque la fin d'une phase d'initialisation $T_R$ des pixels de la ligne, allant de l'instant $u_0$ à l'instant $u_3$, et le début d'une phase d'intégration $T_I$ des pixels de la ligne. A partir de l'instant $u_3$, dans chaque pixel de la ligne, toutes les charges photogénérées dans la photodiode FD sont automatiquement transférées dans la région de lecture FD, du fait de l'initialisation de la photodiode PD à un potentiel sensiblement égal à la limite de la barrière de potentiel fixée par le potentiel $V_{TGref}$. Le gain de conversion de charge-tension du pixel est ainsi préservé durant la lecture qui va être effectuée pendant la phase $T_I$. Le potentiel de la région de lecture FD décroît donc à une vitesse fonction du flux lumineux reçu par la photodiode PD du pixel.

Après l'instant $u_3$, une première lecture $I_1$ du pixel est réalisée. Pour cela, le transistor de sélection 307 est rendu passant (signal RS à un niveau haut), de sorte que le potentiel de la région de lecture FD du pixel est reporté sur la piste conductrice de sortie 309 du pixel. Le noeud FD ayant été initialisé à un potentiel dépendant de la tension de seuil $VT_{305}$ du transistor de lecture 305 du pixel, le potentiel reporté sur la piste 309 est indépendant de la tension de seuil $VT_{305}$ (le potentiel initial du noeud FD à l'instant u3 de début de la phase $T_I$ lorsque le signal RS est encore à l'état haut est indépendant de la tension de seuil $VT_{305}$). Le potentiel reporté sur la piste 309 est comparé à un seuil par un comparateur (non visible sur la figure 3) externe au pixel, de façon à générer un premier bit d'une séquence binaire représentative du niveau d'éclairement du pixel. Dans cet exemple, le capteur comprend un quantificateur 1-bit par colonne de pixels, de façon à pouvoir lire simultanément tous les pixels de la ligne.

Une fois la lecture $I_1$ réalisée, le transistor de sélection 307 est ouvert (signal RS à l'état bas). Les autres lignes de pixels du capteur sont alors successivement lues sensiblement de la même manière. Lorsque toutes les lignes du capteur ont été lues, une deuxième lecture $I_2$ des pixels de la ligne est réalisée, et ainsi de suite jusqu'à une nième lecture $I_n$ qui marque la fin de la phase d'intégration $T_I$ des pixels de la ligne.

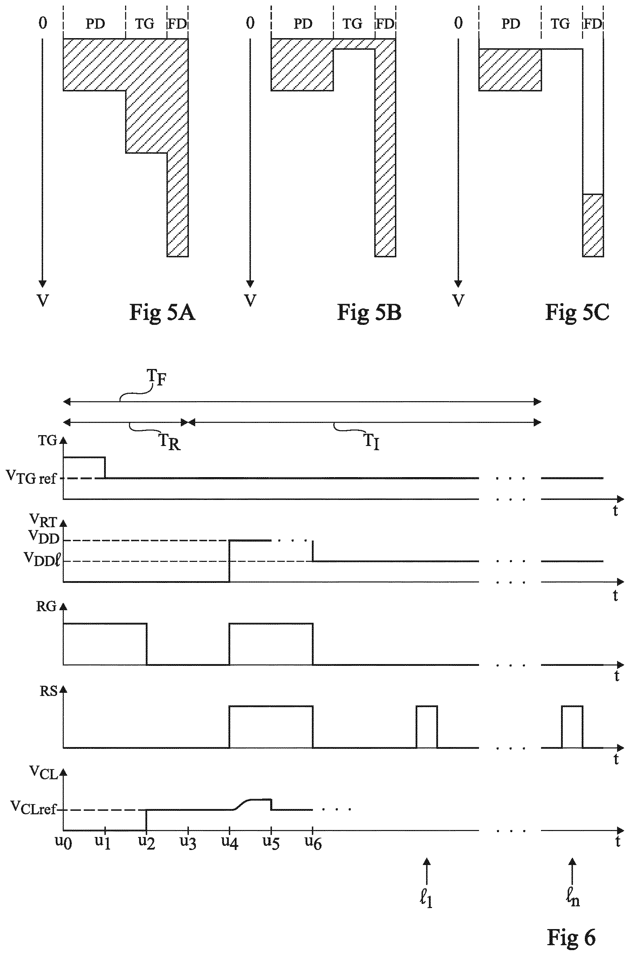

Les figures 5A, 5B et 5C représentent de façon schématique les puits de potentiel dans la photodiode PD, dans la région de transfert contrôlée par la grille de transfert 301 (TG), et dans la région de lecture FD lors des étapes susmentionnées de la phase d'initialisation $T_R$ des pixels de la ligne. Les figures 5A, 5B et 5C illustrent en outre par des hachures, le niveau de remplissage de ces puits de potentiel par des électrons. Comme cela apparaît sur les figures, le maximum du puits de potentiel défini dans la photodiode PD (tension de pincement) est inférieur au maximum du puits de potentiel défini dans la région de lecture FD, ce qui permet le transfert de la totalité des électrons photogénérés de la photodiode PD vers la région de lecture FD lorsque la barrière de potentiel entre la photodiode PD et la région de lecture FD est suffisamment abaissée (la barrière de potentiel imposée par le potentiel TG de la grille 301 s'établit à $V_{TG}-V_{T301}$, $V_{T301}$ désignant la tension de seuil du transistor défini par la grille 301. Le transfert des charges entre la photodiode PD et la région de lecture FD est donc total lorsque la valeur $V_{TG}-V_{T301}$ est supérieure à la tension de pincement de la photodiode PD). La hauteur de la barrière de potentiel formée par la région de transfert contrôlée par la grille de transfert 301, varie en fonction du signal de commande appliqué sur la grille 301.

La figure 5A correspond à la première étape de la phase d'initialisation $T_R$ du pixel, entre les instants $u_0$ et $u_1$. Lors de cette étape le niveau de la barrière de potentiel fixée par le signal de commande de niveau haut appliqué sur la grille de transfert 301 est supérieur au maximum du puits de potentiel défini dans la photodiode PD (ou tension de pincement de la photodiode PD), et inférieur au maximum du puits de potentiel défini dans la région de lecture FD. Les puits de potentiel définis dans les régions PD et FD et dans la région de transfert (TG) sont entièrement remplis d'électrons.

La figure 5B correspond à la deuxième étape de la phase d'initialisation du pixel, entre les instants $u_1$ et $u_2$. Lors de cette étape, le niveau de la barrière de potentiel dépendant du signal de commande de niveau intermédiaire $V_{TGref}$ appliqué sur la grille de transfert 301 est inférieur au maximum du puits de potentiel défini dans la photodiode PD, et inférieur au maximum du puits de potentiel défini dans la région de lecture FD. Les puits de potentiel définis dans les régions PD et FD et dans la région de transfert (TG) sont toujours entièrement remplis d'électrons.

La figure 5C correspond à la troisième étape de la phase d'initialisation du pixel, entre les instants $u_2$ et $u_3$. Lors de cette étape, le niveau de la barrière de potentiel fixée par le signal de commande de niveau intermédiaire $V_{TGref}$ reste inchangé par rapport à l'étape précédente, ce qui permet d'éviter l'introduction de perturbations par couplage capacitif avec la grille 301. Toutefois, une partie des électrons préalablement présents dans la structure est évacuée. Plus particulièrement, le potentiel de la photodiode PD s'établit à la limite de la barrière de potentiel $V_{TGref}-V_{T301}$ fixée par le signal appliqué sur la grille 301, et le potentiel de la région de lecture FD s'établit à une valeur d'initialisation sensiblement égale à $V_{CLref}+V_{T305}$.

Un avantage de cette méthode d'initialisation est que le potentiel d'initialisation de la région de lecture FD tient compte de la tension de seuil $V_{T305}$ du transistor de lecture du pixel. Ceci permet d'éviter d'éventuels artefacts qui pourraient se produire dans l'image du fait des dispersions de tension de seuil des transistors de lecture 305 entre des pixels distincts du capteur.

La figure 6 est un chronogramme illustrant de façon schématique une variante du procédé de commande de la figure 4. La figure 6 illustre plus particulièrement une variante de mise en oeuvre de la phase d'initialisation $T_R$ des pixels du capteur. La figure 6 représente, comme en figure 4, l'évolution des signaux TG, RG, RS, $V_{RT}$ et $V_{CL}$ lors d'une phase $T_F$ d'acquisition d'une image.

A un instant $u_0$ de début de la phase d'acquisition $T_F$ (correspondant à l'instant de début de la phase d'initialisation $T_R$), le transistor de réinitialisation 303 et les transistors de transfert 301 des pixels de la ligne sont commandés à l'état passant (signaux TG et RG à un niveau haut). Le potentiel $V_{RT}$ est quant à lui mis à un niveau bas, par exemple à la masse. Ceci conduit à remplir d'électrons la photodiode PD et la région de lecture FD de chaque pixel de la ligne, ainsi que la zone de transfert entre la photodiode PD et la région de lecture FD du pixel. Lors de cette étape, le transistor de sélection 307 du pixel est maintenu bloqué (signal RS à un niveau bas).

A un instant $u_1$ postérieur à l'instant $u_0$, le signal TG est, comme dans l'exemple de la figure 4, mis à un niveau $V_{TGref}$ intermédiaire entre le niveau bas, pour lequel le transistor de transfert 301 est bloqué, et le niveau haut, pour lequel le transistor de transfert 301 est pleinement passant.

A un instant $u_2$ postérieur à l'instant $u_I$, le transistor 303 est commandé à l'état bloqué (signal RG à l'état bas), et le transistor 307 est maintenu bloqué (signal RS à l'état bas). La piste conductrice de colonne 309 est quant à elle initialisée à un potentiel de référence $V_{CLref}$, par exemple de l'ordre de 1 V.

A un instant $u_3$ postérieur à l'instant $u_2$, la piste conductrice 309 est mise à haute impédance (c'est-à-dire laissée flottante).

A un instant $u_4$ postérieur à l'instant $u_3$, les transistors 307 et 303 sont commandés à l'état passant (signaux RS et RG à l'état haut). Le potentiel $V_{RT}$ appliqué sur le noeud 304 est quant à lui mis à un état haut, par exemple au potentiel d'alimentation haut $V_{DD}$ du capteur, par exemple de l'ordre de 2,5 V. Le potentiel de la région de lecture FD tend alors vers la valeur $V_{DD}$-$V_{T303}$, $V_{T303}$ désignant la tension de seuil du transistor 303. Les capacités parasites des transistors 305 et 307 s'équilibrent en puisant les charges nécessaires sur la capacité parasite de la piste 309 maintenue en haute impédance. Cette pré-charge des capacités parasites permet d'éviter que des charges ne soient puisées dans la région FD à l'étape suivante, en particulier pour charger la capacité parasite grille-source du transistor 305. La tension grille-source du transistor 305 s'établit alors à un niveau permettant la circulation d'un courant drain-source dans le transistor (cette condition est remplie si la condition $V_{DD}$-$V_{CLref}$ > $VT_{305}$ est respectée).

A un instant $u_5$ postérieur à l'instant $u_4$, le noeud 304 est placé en haute impédance, puis la piste conductrice 309 est à nouveau forcée au potentiel de référence $V_{CLref}$. Le potentiel de la région FD tend alors vers le potentiel $V_{CLref}$+$VT_{305}$, en dessous duquel le transistor 305 laissera passer un courant négligeable et pourra être considéré comme bloqué.

A un instant $u_6$ postérieur à l'instant $u_5$, le transistor 303 est à nouveau bloqué (signal RG à l'état bas). A l'instant $u_6$, le transistor 307 est en outre bloqué (signal RS à l'état bas).

L'instant $u_6$ marque la fin de la phase d'initialisation $T_R$ des pixels de la ligne, et le début d'une phase d'intégration $T_I$ des pixels de la ligne. A partir de l'instant $u_6$, dans chaque pixel de la ligne, toutes les charges photogénérées dans la photodiode FD sont automatiquement transférées dans la région de lecture FD, du fait de l'initialisation de la photodiode PD à un potentiel sensiblement égal à la limite de la barrière de potentiel fixée par le potentiel $V_{TGref}$.

La commande des pixels pendant la phase d'intégration $T_I$ est alors identique ou similaire à ce qui a été décrit en relation avec la figure 4.

Un avantage de la méthode d'initialisation décrite en relation avec la figure 6 est que le potentiel de la région de lecture FD à l'issue de la phase d'initialisation dépend, comme dans l'exemple de la figure 4, de la tension de seuil $VT_{305}$ du transistor 305. En outre, par rapport à la méthode d'initialisation de la figure 4, un avantage de la méthode d'initialisation de la figure 6 est qu'elle ne nécessite pas de source de courant, ce qui permet de réduire la consommation électrique du capteur pendant la phase d'initialisation.

On notera que, comme représenté sur la figure 6, le potentiel $V_{RT}$ appliqué sur le noeud 304 peut être maintenu à une valeur $V_{DDI}$ inférieure à la tension $V_{DD}$ pendant la phase d'intégration $T_I$, par exemple une valeur 2 à 3 fois plus faible que la valeur $V_{DD}$, de façon à réduire la consommation électrique du capteur pendant la phase d'intégration.

A titre de variante, dans les procédés de commande décrits ci-dessus en relation avec les figures 4 à 6, plutôt que d'appliquer sur la grille du transistor 301 un signal $V_{TGref}$ intermédiaire générant une barrière de potentiel entre la photodiode PD et la région de lecture FD, le signal $V_{TGref}$ peut être choisi supérieur à la tension de pincement de la photodiode PD (tout en restant inférieur au maximum du puits de potentiel défini dans la région de lecture FD).

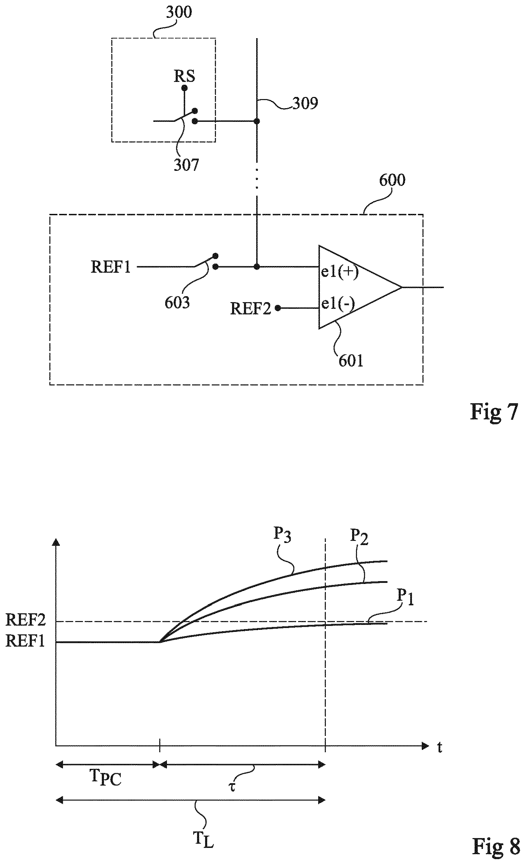

La figure 7 illustre de façon schématique et partielle un exemple d'un capteur d'images selon un mode de réalisation. La figure 7 détaille plus particulièrement un exemple de réalisation d'un circuit périphérique de lecture 600 d'un capteur du type décrit en relation avec les figures 3, 4, 5A, 5B, 5C et 6.

Sur la figure 7, seul un pixel 300 du capteur a été représenté sous la forme d'un bloc en trait interrompus. Seuls le transistor de sélection 307 (commandé par un signal RS) et la piste conductrice de sortie 309 du pixel 300 ont été détaillés.

Dans l'exemple de la figure 7, le circuit périphérique de lecture 600 comprend, pour chaque colonne de pixels, un comparateur de tension 601 dont une première entrée e1, par exemple l'entrée positive, est reliée à la piste conductrice de sortie 309 de la colonne et dont une deuxième entrée e2, par exemple l'entrée négative, est reliée à un noeud d'application d'une tension de référence REF2. Le circuit périphérique de lecture comprend en outre un interrupteur 603 reliant la piste conductrice 309 de la colonne à une tension de référence REF1 inférieure à la tension REF2, par exemple inférieure de 50 mV à la tension REF2.

Le fonctionnement du circuit périphérique de lecture 600 va maintenant être décrit en relation avec la figure 8.

La figure 8 est un chronogramme illustrant, pour trois pixels distincts $P_1$, $P_2$, $P_3$ du capteur, l'évolution du potentiel $V_{CL}$ sur la piste conductrice de sortie 309 de la colonne à laquelle appartient le pixel lors d'une phase de lecture $T_L$ du pixel.

Au début de la phase de lecture $T_L$, L'interrupteur 603 est d'abord fermé pendant une phase de précharge $T_{PC}$, de façon à précharger la piste conductrice de sortie 309 de la colonne à laquelle appartient le pixel au potentiel REF1. Le potentiel REF1 est par exemple choisi supérieur au potentiel de saturation de la région de lecture FD du pixel.

A la fin de la phase de précharge $T_{PC}$, l'interrupteur 603 est ouvert, et l'interrupteur de sélection 307 du pixel de la colonne que l'on souhaite lire est fermé. Le potentiel de la piste conductrice de sortie 309 croît alors à une vitesse d'autant plus importante que le potentiel de la région de lecture FD du pixel est élevé, c'est-à-dire d'autant plus importante que la quantité d'énergie lumineuse reçue par le pixel depuis le début de la période d'intégration est faible.

Après un intervalle de temps d'établissement $\tau$ prédéterminé, la sortie du comparateur 601 est échantillonnée et définit un bit de sortie du pixel. Si le pixel fait croître la tension de la piste conductrice 309 au-dessus de la valeur REF2 pendant l'intervalle de temps $\tau$, on peut en déduire que la quantité d'électrons photogénérés intégrés dans la région de lecture FD depuis le début de la période d'intégration est relativement basse, et plus particulièrement telle que $V_{FD} - V_{T305} > REF2$, où $V_{FD}$ désigne le potentiel de la région de lecture FD. Le bit de sortie du pixel généré à l'issue de la phase de lecture est alors à un état haut. Si au contraire la fermeture de l'interrupteur de sélection 307 du pixel ne provoque pas le basculement du comparateur pendant la période $\tau$, on peut en déduire que la quantité d'électrons photogénérés intégrés dans la région de lecture FD depuis le début de la période d'intégration est relativement haute, et plus particulièrement telle que $V_{FD} - V_{T305} < REF2$. Le bit de sortie du pixel généré à l'issue de la phase de lecture est alors à un état bas.

Un avantage de cette méthode de lecture et de quantification sur un bit de la valeur de sortie d'un pixel, par simple équilibrage puis déséquilibrage de la piste conductrice de sortie 309 de la colonne à laquelle appartient le pixel, est qu'elle est particulièrement rapide et basse consommation. En particulier, il n'est pas nécessaire d'attendre une stabilisation complète du potentiel de la piste conductrice de sortie de la colonne, c'est-à-dire que le temps d'établissement $\tau$ peut être choisi inférieur à la constante de temps du circuit RC défini par la piste conductrice 309.

Cette opération de lecture peut être réalisée ligne par ligne, simultanément pour tous les pixels d'une même ligne et séquentiellement pour des pixels de lignes distinctes.

La fréquence de balayage des lignes peut être choisie en fonction de la résolution souhaitée de la valeur de sortie finale des pixels, du nombre de lignes du capteur, et du temps alloué à chaque étape de lecture d'une valeur binaire de sortie d'un pixel.

A titre d'exemple illustratif, si on considère un capteur au format QVGA (320 colonnes par 240 lignes), une quantification sur 32 niveaux (soit 5 bits), et un temps de lecture $T_L = T_{PC} + \tau = 10\ \mu s$ (soit un balayage des lignes à une fréquence de 100 kHz), la cadence d'acquisition des images par le capteur peut atteindre une valeur FPS de l'ordre de $1/(32*240*10\mu s)$ soit environ 15 images/s.

Les seuils de quantification du circuit périphérique de lecture peuvent être ajustés colonne par colonne, par exemple en fonction de la luminosité globale de la scène, ou selon tout autre critère spécifique. A titre d'exemple, plus la scène est sombre, plus les valeurs REF1 et REF2 peuvent être choisies élevées.

De plus, la fréquence de balayage des lignes du capteur peut être adaptée en fonction de la résolution souhaitée, ou selon tout autre critère spécifique.

Dans une variante de réalisation, la fréquence de balayage des lignes du capteur est modifiée dynamiquement au cours de la phase d'intégration $T_I$ d'une phase d'acquisition $T_F$ d'une image, par exemple pour compenser la réponse inversement proportionnelle à l'éclairement induite par le mode de fonctionnement proposé lorsque la fréquence de balayage des lignes du capteur reste constante tout au long de la période d'intégration $T_I$. A titre d'exemple, la vitesse de balayage des lignes peut être choisie inversement proportionnelle au rang du balayage du capteur lors de la phase d'intégration. Autrement dit, le deuxième balayage des lignes du capteur peut être deux fois plus lent que le premier balayage, le troisième balayage peut être trois fois plus lent que le premier balayage, et ainsi de suite jusqu'au nième balayage qui sera n fois plus lent que le premier balayage. Ceci permet d'obtenir une réponse linaire en fonction de l'éclairement, et non plus une réponse inversement proportionnelle à l'éclairement.

On notera par ailleurs que la cadence d'acquisition des images (FPS) et la fréquence de balayage des lignes du capteur lors de la période d'intégration $T_I$ sont des paramètres qui peuvent être réglés indépendamment l'un de l'autre. A titre d'exemple, pour une scène de faible dynamique, un balayage rapide des lignes du capteur peut être souhaité de façon à pouvoir bien discerner les détails de la scène. Toutefois, une fois les n balayages successifs du capteur réalisés, le capteur peut être mis en attente jusqu'à la prochaine acquisition.

Outre les avantages liés à la faible consommation et au faible encombrement des circuits périphériques de lecture, un avantage des modes de réalisation décrits est qu'ils sont compatibles avec des architectures de pixels et de matrices de pixels existantes et déjà largement éprouvées et optimisées. En effet, par rapport à un capteur d'images traditionnel comportant des circuits périphériques adaptés à lire et numériser sur plusieurs bits la tension de sortie de chaque pixel à l'issue d'une phase d'intégration du pixel, la mise en oeuvre des modes de réalisation décrits ne nécessite pas de modifier l'architecture de la matrice de pixels, mais seulement de modifier les circuits périphériques de lecture et de commande de cette matrice. La méthode de lecture proposée peut donc être implémentée conjointement à une méthode d'adressage et de lecture classique.

Par ailleurs, le type de codage des données obtenu permet de réaliser aisément diverses opérations logiques ou arithmétiques.

Par exemple, pour identifier la valeur du pixel le plus lumineux, respectivement du pixel le moins lumineux d'une même colonne de pixels, il suffit de mémoriser la valeur du premier pixel, respectivement du dernier pixel, qui franchit le seuil de quantification fixé par le circuit périphérique de lecture de la colonne lors d'une phase d'acquisition d'une image.

De façon similaire, pour obtenir la valeur médiane d'une colonne, il suffit de mémoriser la valeur du $(L/2)^{ième}$ pixel de la colonne qui franchit le seuil de quantification fixé par le circuit périphérique de lecture de la colonne, où L désigne le nombre de lignes du capteur.

En outre, une somme pondérée de valeurs de sortie de pixels d'une même colonne peut être implémentée relativement simplement en associant à chaque pixel un coefficient de pondération et en appliquant ce coefficient à chaque valeur binaire de sortie (0 ou 1) obtenue en sortie du quantificateur pour le pixel. En particulier, pour réaliser une somme pondérée des valeurs de sortie des pixels d'une même colonne, un coefficient de pondération kj peut être affecté à chaque ligne de rang j du capteur, où j est un entier allant de 1 à L. A chaque fois qu'une ligne est sélectionnée et que le pixel correspondant de la colonne est lu et quantifié sur un bit par le circuit périphérique de lecture relié à la colonne, le résultat binaire de la quantification est multiplié par le coefficient kj affecté à la ligne, et accumulé dans un intégrateur numérique. La valeur de l'intégrateur numérique à l'issue du $n^{ième}$ balayage du capteur correspond à la somme pondérée des pixels de la colonne.

Plus généralement, la nature du codage des niveaux d'éclairement obtenu par la méthode de lecture proposée (codage temporel constitué par la position d'un front de transition entre un état bas et un état haut dans la séquence binaire de sortie du quantificateur associé au pixel) permet de réaliser relativement aisément diverses opérations ou traitements à la volée, c'est-à-dire au fur et à mesure de l'acquisition des bits de sortie associés à chaque pixel. Par exemple, le codage réalisé permet aisément de générer à la volée un histogramme de l'image acquise.

En outre, le codage obtenu est bien adapté à la mise en oeuvre d'une opération de calcul à la volée d'une transformée ou projection de l'image acquise dans un autre domaine de représentation, par exemple une transformée du domaine spatial vers le domaine fréquentiel telle qu'une transformée de type DCT (de l'anglais "Discrete Cosine Transform" - transformée en cosinus discrète) ou une transformée de type DWT (de l'anglais "Discrete Wavelet Transform" - transformée en ondelettes discrète), ou encore une transformée par une matrice de passage adaptée à réaliser une réduction de dimensions visant à exacerber certaines caractéristiques de la scène, par exemple en vue de réaliser des opérations de classification.

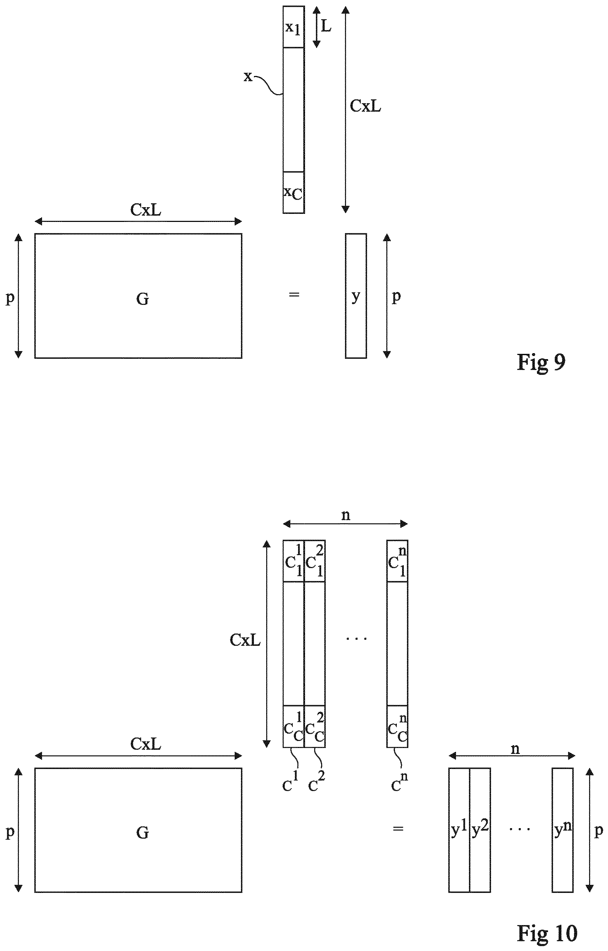

Classiquement, une opération de transformation d'une image de L lignes par C colonnes (ou L et C sont des entiers) dans un autre domaine de représentation peut être réalisée comme illustré par la figure 9.

La figure 9 représente plus particulièrement un vecteur x de dimension C*L constitué par la mise bout à bout de C vecteurs $x_1$, ..., $x_C$ de dimension L, chaque vecteur $x_i$, avec i entier allant de 1 à C, correspondant à la suite des L valeurs $x_i(1)$, ... $x_i(L)$ des pixels de la colonne de rang i.

L'opération de transformation de l'image dans un autre domaine de représentation correspond à la multiplication du vecteur x par une matrice de passage G comportant C*L colonnes et p lignes, ou p est un entier. Le vecteur y de dimension p résultant de cette multiplication correspond au résultat de la transformation.

Dans un capteur d'images classique, il convient d'attendre d'avoir lu et mémorisé l'intégralité des valeurs de sortie des pixels du capteur pour pouvoir réaliser l'opération de transformation. Ceci implique de pouvoir disposer d'une mémoire adaptée à stocker simultanément l'intégralité des valeurs de sortie des pixels du capteur.

La nature du codage des niveaux d'éclairement obtenu par la méthode de lecture proposée ci-dessus permet de réaliser la même opération de transformation, à la volée, sur les plans images binaires fournis par le capteur après chaque balayage de l'ensemble des lignes du capteur.

La figure 10 illustre un exemple de mise en oeuvre d'une telle opération de calcul à la volée d'une transformée de l'image acquise par un capteur de L lignes par C colonnes selon un mode de réalisation.

A chaque balayage complet de rang k du capteur, avec k entier allant de 1 à n et n désignant le nombre total de balayages successifs du capteur lors d'une phase d'acquisition d'une image, un vecteur binaire $c^k$ de dimension C*L est généré. Chaque vecteur $c^k$ est constitué par la mise bout à bout de C vecteurs $c_1^k$, ... $c_C^k$ de dimension L, chaque vecteur $c_i^k$, avec i entier allant de 1 à C, correspondant à la suite des L valeurs binaires $c_i^k(1)$, ... $c_i^k(L)$ des pixels de la colonne de rang i obtenues lors du $k^{ième}$ balayage du capteur.

Le capteur comporte par exemple une mémoire de dimensions C*L bits adaptée à mémoriser le vecteur $c^k$.

A l'issue de chaque balayage de rang k du capteur, le vecteur $c^k$ obtenu à la fin du balayage est multiplié, par un circuit de traitement adapté, par la matrice de passage G de la transformée, ce qui conduit à la génération d'un vecteur $y^k$ de dimension p correspondant au résultat de la multiplication.

Au fur et à mesure des balayages successifs du capteur, les vecteurs $y^1$, ... $y^n$ sont intégrés ou accumulés par un circuit d'intégration à p voies, de façon à obtenir, à l'issue du dernier balayage de rang k = n, un vecteur $y = y^1 + ... + y^n$ de dimension p correspondant au résultat final de la transformation. Plus particulièrement, le circuit d'intégration peut comporter, pour chacune des p valeurs de sortie du vecteur y, un intégrateur adapté à intégrer à la volée la valeur $y(r) = y^1(r) + ... + y^n(r)$, où r est un entier allant de 1 à p.

Ainsi, l'opération de transformation peut être décomposée en n opérations successives de transformation des plans images binaires obtenus à l'issue des balayages successifs du capteur. Ces opérations de transformation des plans images binaires peuvent être réalisées à la volée sans attendre l'acquisition de l'image complète par le capteur. Ceci permet de calculer la transformée sans avoir à conserver simultanément en mémoire les n plans images binaires acquis. On peut ainsi réduire les dimensions des circuits mémoires associés au capteur, notamment dans le cas où l'on ne souhaite pas conserver l'image finale mais uniquement le résultat de la transformation.

Des modes de réalisation particuliers ont été décrits. Diverses variantes et modifications apparaîtront à l'homme de l'art. En particulier, les modes de réalisation décrits ne se limitent pas à l'exemple particulier de pixel décrit en relation avec la figure 3. Plus généralement, les modes de réalisation décrits sont compatibles avec la plupart des architectures connues de pixels CMOS, par exemple des pixels 3T, qui diffèrent du pixel de la figure 3 en ce qu'ils ne comportent pas la grille de transfert 301 et la région de lecture FD, la région d'accumulation de la photodiode PD étant alors directement connectée à la grille du transistor de lecture 305.

En outre, les modes de réalisation décrits ne se limitent pas à la méthode d'initialisation des pixels décrites en relation avec la figure 4, dans laquelle la région de lecture de chaque pixel est initialisée à un potentiel de référence par l'intermédiaire du transistor de lecture 305 du pixel. A titre de variante, les pixels peuvent être initialisés par toute autre méthode d'initialisation connue, par l'exemple par l'intermédiaire de leur seul transistor de réinitialisation 303.

De plus, les modes de réalisation décrits ne se limitent pas à l'exemple de circuit de quantification 1-bit décrit en relation avec la figure 7. Plus généralement, tout autre circuit de quantification sur 1-bit de la valeur de sortie d'un pixel peut être utilisé, pour autant que l'échantillonnage et la quantification sur 1-bit soient non destructifs pour la valeur de sortie du pixel.

En outre, les modes de réalisation décrits ne se limitent pas au cas où, lors d'une phase d'acquisition d'une image, chaque pixel est successivement sélectionné un nombre prédéterminé de fois. A titre de variante, le nombre n de sélections des pixels peut être adapté dynamiquement en fonction de l'état de sortie des pixels. Par exemple, l'acquisition peut être interrompue dès qu'au moins un des pixels franchit le seuil de commutation du comparateur qui lui est associé, ou lorsqu'au moins un des pixels franchit le seuil de commutation du comparateur qui lui est associé après un nombre prédéterminé de balayages du capteur.

Dans les modes de réalisation décrits précédemment, il est prévu d'observer, par des balayages successifs de la matrice de pixels, l'évolution des signaux de sortie des pixels au cours de la période d'intégration. Comme expliqué ci-dessus, la résolution de quantification du signal dépend alors du nombre de balayages successifs du capteur effectués pendant la période d'intégration. Une limitation de ce mode de fonctionnement est que, en pratique, la période d'intégration peut être ajustée en fonction du niveau de luminosité moyen de la scène dont on souhaite acquérir une image. Plus particulièrement, pour une scène sombre, la période d'intégration du capteur peut être choisie plus longue que pour une scène lumineuse. Pour maintenir une résolution de quantification constante, il convient donc d'ajuster la vitesse de balayage du capteur en fonction du niveau de luminosité ambiante, ce qui pose divers problèmes.

Selon un aspect d'un deuxième mode de réalisation, on prévoit un capteur similaire aux capteurs décrits précédemment, mais dans lequel la vitesse de balayage du capteur et la résolution de quantification du signal peuvent être fixées indépendamment de la durée de la période d'intégration.

Comme dans les exemples décrits précédemment, le capteur comprend une pluralité de pixels identiques ou similaires, chaque pixel comprenant un photodétecteur et un circuit de contrôle et de lecture adapté à intégrer, sur un noeud capacitif de lecture du pixel, un photocourant représentatif du flux lumineux reçu par le photodétecteur du pixel.

Le fonctionnement du capteur selon le deuxième mode de réalisation est le suivant. Lors d'une phase d'acquisition d'une image, chaque pixel est d'abord réinitialisé, par exemple de façon identique ou similaire à ce qui a été décrit précédemment. Une phase d'intégration de durée prédéfinie est ensuite mise en oeuvre, pendant laquelle la tension sur le noeud de lecture du pixel décroît en fonction de la quantité d'énergie lumineuse reçue par le pixel depuis le début de la phase d'intégration.

A la différence des exemples précédents, la tension du noeud de lecture du pixel n'est pas échantillonnée pendant la période d'intégration.

A la fin de la période d'intégration, le noeud de lecture est isolé du photodétecteur de façon à mémoriser sur le noeud de lecture une tension représentative du niveau d'éclairement reçu par le photodétecteur pendant la période d'intégration. A titre d'exemple, dans le cas d'un pixel du type décrit en relation avec la figure 3, à la fin de la période d'intégration la grille de transfert 301 est bloquée par application d'un signal de niveau bas sur le noeud TG, de façon à isoler la région de lecture FD de la photodiode PD.

A l'issue de la période d'intégration, par exemple consécutivement à la période d'intégration, une phase de lecture du niveau de tension présent sur le noeud de lecture est mise en oeuvre. Pendant la phase de lecture, la tension présente sur le noeud de lecture est successivement échantillonnée et quantifiée sur un bit une pluralité de fois de façon synchrone, par exemple périodiquement, par un circuit périphérique de lecture externe au pixel. Pour cela, le capteur est balayé successivement une pluralité de fois de façon similaire à ce qui a été décrit précédemment. Toutefois, à la différence des exemples décrits précédemment dans lesquels le seuil de quantification sur un bit était constant tout au long de la période d'intégration, dans le deuxième mode de réalisation, le seuil de quantification sur un bit varie de façon monotone, par exemple selon une rampe de tension croissante linéaire, tout au long de la période de lecture. Le signal binaire résultant peut être mémorisé et/ou intégré dans un intégrateur numérique externe au pixel, par exemple un compteur numérique. Comme dans les exemples précédents, le noeud de lecture du pixel n'est pas réinitialisé pendant la phase de lecture.

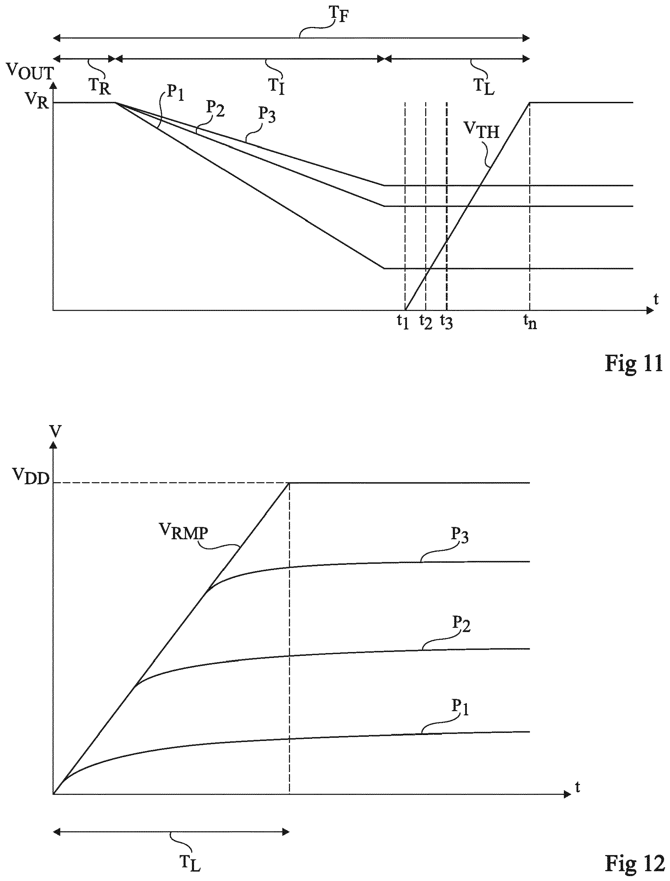

La figure 11 est un chronogramme illustrant de façon schématique le fonctionnement d'un capteur d'images selon le deuxième mode de réalisation.

Comme dans l'exemple de la figure 1, la figure 11 représente l'évolution en fonction du temps, pour trois pixels distincts $P_1$, $P_2$, $P_3$ du capteur, de la tension de sortie $V_{OUT}$ du pixel (c'est-à-dire la tension sur le noeud capacitif de lecture du pixel) lors d'une phase $T_F$ d'acquisition d'une image.

Lors de la phase d'acquisition $T_F$, chaque pixel est d'abord réinitialisé pendant une phase d'initialisation $T_R$. Lors de la phase d'initialisation $T_R$, la tension de sortie du pixel est initialisée à une valeur $V_R$. Une phase d'intégration du pixel $T_I$ de durée prédéfinie est ensuite mise en oeuvre. Pendant la phase d'intégration $T_I$, la tension de sortie $V_{OUT}$ de chaque pixel décroît à une vitesse fonction de l'intensité lumineuse reçue par le pixel. A l'issue de la phase d'intégration $T_I$, le noeud de lecture de chaque pixel est isolé du photodétecteur du pixel, de façon à mémoriser sur le noeud de lecture du pixel un niveau de tension représentatif du niveau d'éclairement reçu par le pixel pendant la phase d'intégration $T_I$. Une fois que le noeud de lecture de chaque pixel du capteur a été isolé du photodétecteur du pixel, son niveau de tension reste sensiblement constant. Une phase de lecture $T_L$ est alors mise en oeuvre. Pendant la phase de lecture $T_L$, chaque pixel est lu une pluralité de fois à des

instants prédéterminés $t_1$, ... $t_n$, où n est un entier désignant le nombre de lectures successives du pixel lors de la phase de lecture $T_L$, par exemple supérieur ou égal à 4. Dans l'exemple représenté, le pixel est lu périodiquement à une fréquence de l'ordre de $n/T_L$ pendant toute la durée de la phase d'intégration $T_L$. Entre deux lectures successives d'une ligne de pixels du capteur, l'ensemble des autres lignes du capteur est balayé une fois de façon similaire à ce qui a été décrit précédemment. Ainsi, pendant la phase de lecture $T_L$, le capteur est balayé n fois à une fréquence de l'ordre de $n/T_L$.

A chaque lecture du pixel, la tension de sortie $V_{OUT}$ du pixel est quantifiée sur 1 bit. Pour cela, la tension de sortie $V_{OUT}$ du pixel est comparée à un seuil prédéfini $V_{TH}$ par un comparateur externe au pixel, et le résultat de la comparaison est mémorisé. A la fin de la phase d'intégration $T_L$, la suite de n échantillons binaires obtenue définit la valeur de sortie du pixel. A la différence des exemples décrits précédemment, et en particulier du mode de réalisation de la figure 1, dans l'exemple de la figure 11, le seuil $V_{TH}$ n'est pas constant mais varie de façon monotone, par exemple selon une rampe linéaire croissante, tout au long de la phase de lecture $T_L$.

On obtient ainsi, pour chaque pixel, une séquence de n bits de sortie similaire aux séquences représentées aux figures 2A, 2B et 2C. Plus particulièrement, pour chaque pixel, le signal binaire de sortie du pixel est à un premier état (par exemple à l'état bas) tant que la tension $V_{TH}$ est inférieure au niveau de tension présent sur le noeud de lecture du pixel. Lorsque la tension $V_{TH}$ atteint un niveau égal à la tension de sortie du pixel, le signal binaire de sortie du pixel passe à un deuxième état (par exemple à l'état haut). Le signal binaire de sortie du pixel reste ensuite au deuxième état jusqu'à la fin de la phase de lecture $T_L$.

Comme dans les exemples précédents, la position du front de transition entre l'état bas et l'état haut dans la séquence binaire de sortie du pixel est représentative de l'intensité lumineuse reçue par le pixel pendant la phase d'intégration $T_I$. Plus le pixel est fortement éclairé, plus le front de transition intervient tôt dans la séquence binaire de sortie du pixel, et inversement. Comme décrit précédemment, les n valeurs de la séquence binaire de sortie du pixel peuvent être intégrées numériquement pour fournir une valeur de sortie du pixel codée sur un nombre de bits inférieur à n.

Ainsi, le mode de fonctionnement décrit en relation avec la figure 11 présente les mêmes avantages que les modes de réalisation décrits précédemment, notamment en termes de format de codage des données de sortie et de compatibilité avec un traitement à la volée des données binaires de sortie des pixels, et présente l'avantage supplémentaire de permettre de choisir la vitesse de balayage du capteur et la résolution de quantification du signal indépendamment de la durée de la période d'intégration.

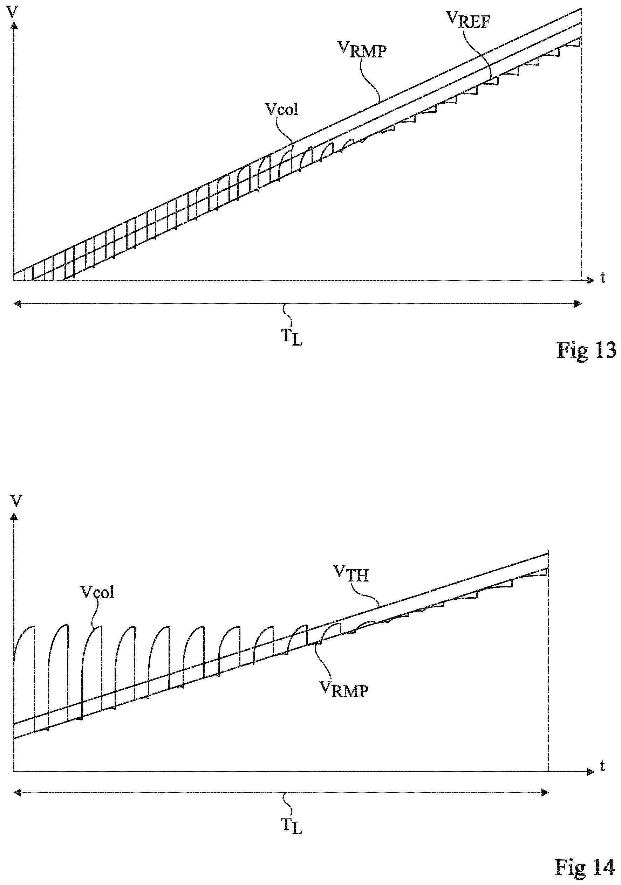

Les figures 12 et 13 sont des chronogrammes illustrant plus en détail un exemple d'un procédé de lecture d'un capteur d'images selon le deuxième mode de réalisation. On considère dans cet exemple un capteur du type décrit en relation avec la figure 3. Les figures 12 et 13 illustrent plus particulièrement la mise en oeuvre de la phase de lecture $T_L$ d'un pixel, suivant la phase d'intégration $T_I$.

La figure 12 représente plus particulièrement l'évolution d'une tension $V_{RMP}$ appliquée sur le noeud de drain du transistor suiveur de tension 305 de chaque pixel du capteur pendant la phase de lecture $T_L$. La figure 12 représente en outre l'évolution, pour trois pixels distincts $P_1, P_2, P_3$ du capteur, de la tension sur le noeud de source du transistor suiveur de tension 305 du pixel pendant la phase $T_L$.

La tension $V_{RMP}$ suit une rampe croissante, par exemple linéaire, tout au long de la phase de lecture $T_L$. A titre d'exemple, la tension $V_{RMP}$ croît linéairement depuis une valeur nulle au début de la phase de lecture $T_L$ jusqu'à atteindre une valeur sensiblement égale à la tension nominale d'alimentation $V_{DD}$ du capteur à la fin de la phase de lecture $T_L$. Au cours de la phase $T_L$, on balaye successivement une pluralité de fois les différentes lignes de la matrice de pixels du capteur, de manière à observer l'évolution de la tension sur les noeuds de source des transistors 305 des pixels.

Dans chaque pixel, la tension sur le noeud de source du transistor 305 suit d'abord la croissance de la tension $V_{RMP}$, jusqu'à atteindre une tension sensiblement égale à Vpix-Vth$_{305}$, où Vpix désigne la tension sur la grille du transistor 305, et Vth$_{305}$ désigne la tension de seuil du transistor 305. La tension sur le noeud de source du transistor 305 reste ensuite sensiblement constante et égale à la valeur Vpix-Vth$_{305}$, tandis que la tension sur le noeud de drain du transistor 305 continue de croître jusqu'à la fin de la phase $T_L$.

Dans le procédé de lecture des figures 12 et 13, on prévoit, à chaque balayage du capteur et pour chaque pixel du capteur, de quantifier sur un bit l'écart entre la tension $V_{RMP}$ et la tension de source du transistor 305 du pixel de façon à détecter le passage de la rampe de tension $V_{RMP}$ par la valeur Vpix-Vth$_{305}$.

Pour cela, à chaque étape de lecture d'une ligne du capteur, les capacités parasites des pistes conductrices de sortie 309 des pixels de la ligne sont d'abord préchargées à une tension $V_{REF} = V_{RMP} - \Delta V$, où $\Delta V$ est une valeur constante pendant toute la durée de la phase de lecture, par exemple comprise entre 0,1 et 1 V. Les pistes conductrices de sortie 309 sont ensuite laissées flottantes, puis les transistors de sélection 307 des pixels de la ligne sont rendus passants. Pour chaque pixel de la ligne, la tension $V_{col}$ de la piste conductrice de sortie 309 du pixel s'établit alors à une valeur fonction de la tension Vpix présente sur la grille du transistor 305. Tant que la valeur Vpix-Vth$_{305}$ est supérieure à la tension $V_{REF}=V_{RMP}-\Delta V$, on observe une variation positive du niveau de tension de la piste conductrice de sortie 309 du pixel lors de la mise à l'état passant du transistor de sélection 307. En revanche, lorsque la valeur Vpix-Vth$_{305}$

devient inférieure ou égale à la tension $V_{REF}=V_{RMP}-\Delta V$, on n'observe plus de variation de tension sur la piste conductrice de sortie 309 du pixel lors de la mise à l'état passant du transistor 307.

A titre d'exemple, le capteur comprend, pour chaque colonne de pixels, un comparateur relié à la piste conductrice de sortie 309 partagée par les pixels de la colonne. A chaque étape de lecture d'une ligne du capteur, le comparateur compare la tension $V_{col}$ de la piste 309 (après la mise à l'état passant du transistor 307 du pixel) à une tension seuil $V_{TH}$ intermédiaire entre les tensions $V_{RMP}$ et $V_{REF}$, par exemple sensiblement égale à VRMP-$\Delta$V/2. Le résultat de la comparaison est mémorisé, et, à la fin de la phase de lecture $T_L$, après n balayages successifs de la matrice de pixels, la suite de n échantillons binaires obtenue pour chaque pixel définit la valeur de sortie du pixel.

La figure 13 illustre l'évolution des tensions $V_{RMP}$, $V_{REF}$, $V_{TH}$ et $V_{col}$ (la tension Vcol est représentée pour un pixel unique du capteur) pendant la phase de lecture $T_L$.

La position du front de transition entre l'état bas et l'état haut dans la séquence binaire de sortie du pixel est représentative du niveau de tension sur le noeud de lecture du pixel pendant la phase de lecture $T_L$, et par conséquent de l'intensité lumineuse reçue par le pixel pendant la phase d'intégration $T_I$. Plus particulièrement, la position du front de transition entre l'état bas et l'état haut dans la séquence binaire de sortie du pixel est représentative de l'instant de la phase de lecture $T_L$ auquel la tension sur le noeud de source du transistor 305 du pixel cesse de suivre la rampe de tension $V_{RMP}$ appliquée sur le noeud de drain du transistor 305. Plus le pixel a été fortement éclairé pendant la phase d'intégration $T_I$, plus la tension sur son noeud de lecture est faible, et plus le front de transition intervient tôt dans la séquence binaire de sortie du pixel, et inversement.

La figure 14 est un chronogramme illustrant un autre exemple d'un procédé de lecture d'un capteur d'images selon le deuxième mode de réalisation. Dans cet exemple, la tension appliquée sur les noeuds de drain des transistors suiveurs de tension 305 des pixels du capteur est maintenue sensiblement constante, par exemple sensiblement égale à la tension d'alimentation $V_{DD}$ du capteur, pendant toute la durée de la phase de lecture $T_L$ du capteur. Une rampe de tension $V_{RMP}$ est en revanche utilisée comme tension de précharge des pistes conductrices de sortie 309 des pixels du capteur. A titre d'exemple, la tension $V_{RMP}$ croît linéairement depuis une valeur nulle au début de la phase de lecture $T_L$ jusqu'à atteindre une valeur sensiblement égale à la tension nominale d'alimentation $V_{DD}$ du capteur à la fin de la phase de lecture $T_L$. Au cours de la phase $T_L$, on balaye successivement une pluralité de fois les différentes lignes de la matrice de pixels du capteur.

A chaque étape de lecture d'une ligne du capteur, les capacités parasites des pistes conductrices de sortie 309 des pixels de la ligne sont d'abord préchargées à la tension $V_{RMP}$. Les pistes conductrices de sortie 309 sont ensuite laissées flottantes, puis les transistors de sélection 307 des pixels de la ligne sont rendus passants. Pour chaque pixel de la ligne, si la tension Vpix-Vth$_{305}$ présente sur le noeud de source du transistor 305 est supérieure à la tension $V_{RMP}$, on observe une variation positive du niveau de tension de la piste conductrice de sortie 309 du pixel lors de la mise à l'état passant du transistor de sélection 307. Dans le cas contraire, le niveau de tension de la piste conductrice de sortie 309 du pixel ne varie pas lors de la mise à l'état passant du transistor 307 (en effet, le transistor 305 n'est pas polarisé par une source de courant et ne peut donc que faire croître ou maintenir inchangé le potentiel de la piste 309).

A titre d'exemple, le capteur comprend, pour chaque colonne de pixels, un comparateur relié à la piste conductrice de sortie 309 partagée par les pixels de la colonne. A chaque étape de lecture d'une ligne du capteur, le comparateur compare la tension $V_{col}$ de la piste 309 (après la mise à l'état passant du transistor 307 du pixel) à une tension seuil $V_{TH}$ égale à $V_{RMP}+\Delta V$, où $\Delta V$ est une valeur constante pendant toute la durée de la phase de lecture, par exemple comprise entre 0,1 et 1 V. Le résultat de la comparaison est mémorisé, et, à la fin de la phase de lecture $T_L$, après n balayages successifs de la matrice de pixels, la suite de n échantillons binaires obtenue pour chaque pixel définit la valeur de sortie du pixel.

La figure 14 illustre l'évolution des tensions $V_{RMP}$, $V_{TH}$ et $V_{col}$ (la tension Vcol est représentée pour un pixel unique du capteur) pendant la phase de lecture $T_L$.

La position du front de transition entre l'état bas et l'état haut dans la séquence binaire de sortie du pixel est représentative de l'instant de la phase de lecture $T_L$ auquel la tension sur le noeud de source du transistor 305 du pixel cesse d'être supérieure à la rampe de tension $V_{RMP}$. Plus le pixel a été fortement éclairé pendant la phase d'intégration $T_I$, plus la tension sur son noeud de lecture est faible, et plus le front de transition intervient tôt dans la séquence binaire de sortie du pixel, et inversement.

On notera que dans l'exemple de procédé de lecture des figures 12 et 13, ou dans l'exemple de procédé de lecture de la figure 14, on peut prévoir de limiter l'excursion de tension sur les pistes conductrices de sortie 309, et par conséquent la consommation dynamique du capteur, en maintenant la tension appliquée sur le noeud de drain du transistor 305 toujours inférieure à la tension nominale d'alimentation $V_{DD}$ du capteur, par exemple inférieure ou égale à une valeur maximale $V_{DD1}$ 2 à 3 fois plus faible que la valeur $V_{DD}$. A titre de variante, un résultat similaire peut être obtenu en limitant la tension RS de mise à l'état passant du transistor de sélection 307 au niveau $V_{DD1}$.

Par ailleurs, on notera qu'un avantage des modes de réalisation décrits en relation avec les figures 1 à 14 est que le format de sortie des données est particulièrement adapté à la mise en oeuvre de fonctions d'ordonnancement des pixels par niveaux de luminosité croissant ou décroissant, et d'égalisation d'histogramme. En particulier, selon l'application envisagée, on pourra prévoir d'associer à chaque pixel une valeur fonction de l'ordre de franchissement du seuil de quantification par les pixels.

## Revendications

1. Capteur d'images comportant :

   - une pluralité de pixels (300), chaque pixel comprenant une photodiode (PD) et un noeud de lecture (FD) et étant adapté à fournir sur son noeud de lecture (FD) un signal de sortie ($V_{OUT}$) représentatif d'une quantité d'énergie lumineuse reçue par sa photodiode (PD) pendant une phase d'intégration ($T_I$) du pixel ; et
   - un circuit de commande configuré pour, lors d'une phase d'acquisition ($T_F$) d'une image, sélectionner successivement chaque pixel (300) un nombre n de fois sans réinitialiser le noeud de lecture du pixel entre la première et la dernière sélection du pixel, et, à chaque sélection du pixel, comparer le signal de sortie ($V_{OUT}$) du pixel à un seuil de quantification et lire un échantillon binaire ($B_{OUT}$) représentatif du résultat de la comparaison, la suite de n échantillons binaires ainsi obtenue constituant la valeur de sortie du pixel.

2. Capteur selon la revendication 1, dans lequel, pour chaque pixel, les n sélections successives du pixel sont réalisées au cours d'une même phase d'intégration ($T_I$) du pixel.

3. Capteur selon la revendication 2, dans lequel le seuil de quantification est constant tout au long de la phase d'intégration ($T_I$).

4. Capteur selon la revendication 2 ou 3, dans lequel le circuit de commande est configuré pour que l'intervalle de temps entre deux sélections successives du pixel (300) soit sensiblement constant tout au long de la phase d'intégration ($T_I$) du pixel.

5. Capteur selon la revendication 2 ou 3, dans lequel le circuit de commande est configuré pour que l'intervalle de temps entre deux sélections successives du pixel (300) varie au cours de la phase d'intégration ($T_I$) du pixel.

6. Capteur selon la revendication 5, dans lequel le circuit de commande est configuré pour que l'intervalle de temps entre deux sélections successives du pixel (300) soit inversement proportionnel au rang de la sélection parmi les n sélections successives du pixel de la phase d'intégration (T$_I$).

7. Capteur selon la revendication 1, dans lequel, pour chaque pixel, les n sélections successives du pixel sont réalisées au cours d'une phase de lecture (T$_L$) suivant la phase d'intégration (T$_I$) du pixel.

8. Capteur selon la revendication 7, dans lequel le seuil de quantification varie de façon monotone tout au long de la phase de lecture (T$_L$).

9. Capteur selon l'une quelconque des revendications 1 à 8, dans lequel chaque pixel (300) comprend :

un transistor de réinitialisation (303) reliant son noeud de lecture (FD) à un noeud de réinitialisation (304) du pixel ;
un transistor de lecture (305) monté en source suiveuse, dont la grille est connectée au noeud de lecture (FD) et dont le drain est connecté au noeud de réinitialisation (304) ; et
un transistor de sélection (307) reliant la source du transistor de lecture (305) à une piste conductrice de sortie (309) du pixel.

10. Capteur selon la revendication 9, dans lequel le circuit de commande est configuré pour, lors d'une phase d'acquisition d'une image (T$_F$), mettre en oeuvre, pour chaque pixel (300), une phase (T$_R$) d'initialisation du pixel comprenant la réinitialisation du noeud de lecture (FD) du pixel à une première tension de référence (V$_R$) par l'intermédiaire de la piste conductrice de sortie (309), du transistor de sélection (307), du transistor de lecture (305) et du transistor de réinitialisation (303) du pixel.

11. Capteur selon la revendication 10, dans lequel le circuit de commande est configuré pour, lors de la phase d'initialisation (T$_R$) d'un pixel, configurer le pixel en amplificateur à source commune en appliquant un courant de polarisation sur le noeud de réinitialisation (304) du pixel et en appliquant un potentiel de référence (V$_{CLref}$) fixe sur la piste conductrice de sortie (309) du pixel.

12. Capteur selon la revendication 10, dans lequel le circuit de commande est configuré pour, lors de la phase d'initialisation (T$_R$) d'un pixel, mettre en oeuvre les étapes successives suivantes :

initialiser à un potentiel de référence (V$_{CLref}$) la piste conductrice de sortie (309) du pixel puis mettre à un état de haute impédance ladite piste conductrice de sortie (309) ;
commander le transistor de réinitialisation (303) et le transistor de sélection (307) à l'état passant ; et

mettre à un état de haute impédance le noeud de réinitialisation (304) du pixel et forcer la piste conductrice de sortie (309) du pixel au potentiel de référence (V$_{CLref}$).

13. Capteur selon l'une quelconque des revendications 9 à 12, dans lequel chaque pixel (300) comprend en outre une grille de transfert (301) adaptée à contrôler le transfert des charges photogénérées entre sa photodiode (PD) et son noeud de lecture (FD).

14. Capteur selon l'une quelconque des revendications 9 à 13, dans lequel le circuit de commande comprend un circuit périphérique de lecture (600) comportant au moins un comparateur (601), et dans lequel chaque pixel (300) a sa piste conductrice de sortie (309) connectée à une première entrée (e1) dudit au moins un comparateur (601).

15. Capteur selon la revendication 14 dans son rattachement à la revendication 2, dans lequel le circuit de commande est configuré pour, à chaque sélection d'un pixel (300) lors d'une phase d'intégration (T$_I$) du pixel, mettre en oeuvre les étapes suivantes :

a) précharger la piste conductrice de sortie (309) du pixel à une deuxième tension de référence (REF1) ;
b) appliquer une troisième tension de référence (REF2) supérieure à la deuxième tension de référence (REF1) sur une deuxième entrée (e2) dudit au moins un comparateur (601) ;
c) fermer le transistor de sélection (307) du pixel ; et
d) après un temps d'établissement ($\tau$) prédéterminé après l'étape c), lire la valeur de sortie du comparateur (601).

16. Capteur selon l'une quelconque des revendications 1 à 15, dans lequel les pixels (300) sont agencés en matrice selon des lignes et des colonnes, et dans lequel le circuit de commande est adapté à commander simultanément les pixels d'une même ligne et à commander successivement les pixels de lignes distinctes selon un procédé de commande de type à obturation déroulante.

17. Capteur selon l'une quelconque des revendications 1 à 16, dans lequel ledit seuil de quantification est ajustable.

18. Dispositif comportant un capteur selon l'une quelconque des revendications 1 à 17, et un circuit de traitement à la volée des signaux binaires (B$_{OUT}$) lus par le circuit de commande du capteur.

19. Dispositif selon la revendication 18, dans lequel le circuit de traitement est adapté, à chaque balayage de l'ensemble des pixels du capteur, à multiplier un vecteur d'entrée binaire ($c^k$) formé par l'ensemble des signaux binaires lus par le circuit de commande du capteur pour les différents pixels du capteur, par une matrice de passage (G).

20. Dispositif selon la revendication 19, dans lequel le circuit de traitement est adapté, lors de balayages successifs de l'ensemble des pixels du capteur, à intégrer des vecteurs de sortie ($y^k$) successifs résultant de la multiplication des vecteurs d'entrée ($c^k$) successifs par la matrice de passage (G).

**Patentansprüche**

1. Bildsensor, der Folgendes aufweist:

    - eine Vielzahl von Pixeln (300), wobei jedes Pixel eine Fotodiode (PD) und einen Ausleseknoten (FD) aufweist und in der Lage ist, an seinem Ausleseknoten (FD) ein Ausgangssignal ($V_{OUT}$) zu liefern, das eine Lichtenergiemenge repräsentiert, die von seiner Fotodiode (PD) während einer Pixelintegrationsphase ($T_I$) empfangen wurde; und
    - eine Steuerschaltung, die konfiguriert ist, um während einer Phase der Erfassung ($T_F$) eines Bildes nacheinander jedes Pixel (300) eine Anzahl von n Malen auszuwählen, ohne das Pixel zwischen der ersten und der letzten Auswahl des Pixels zurückzusetzen, und um bei jeder Auswahl eines Pixels das Ausgangssignal ($V_{OUT}$) des Pixels mit einem Quantisierungsschwellenwert zu vergleichen und ein Binärsignal ($B_{OUT}$) auszulesen, das für das Ergebnis des Vergleichs repräsentativ ist, wobei die so erhaltene Folge von n Binärsignalen den Pixelausgangswert bildet.

2. Sensor nach Anspruch 1, wobei für jedes Pixel die n aufeinanderfolgenden Auswahlen des Pixels während einer gleichen Pixelintegrationsphase ($T_I$) durchgeführt werden.

3. Sensor nach Anspruch 2, wobei der Quantisierungsschwellenwert während der gesamten Integrationsphase ($T_I$) konstant ist.

4. Sensor nach Anspruch 2 oder 3, wobei die Steuerschaltung so konfiguriert ist, dass das Zeitintervall zwischen zwei aufeinanderfolgenden Auswahlen des Pixels (300) über die Länge der Pixelintegrationsphase ($T_I$) hinweg im Wesentlichen konstant ist.

5. Sensor nach Anspruch 2 oder 3, wobei die Steuerschaltung so konfiguriert ist, dass sich das Zeitintervall zwischen zwei aufeinanderfolgenden Auswahlen des Pixels (300) über die Länge der Pixelintegrationsphase ($T_I$) hinweg ändert.

6. Sensor nach Anspruch 5, wobei die Steuerschaltung so konfiguriert ist, dass das Zeitintervall zwischen zwei aufeinanderfolgenden Selektionen des Pixels (300) umgekehrt proportional zum Rang der Auswahl aus den n aufeinanderfolgenden Auswahlen des Pixels während der Integrationsphase ($T_I$) ist.

7. Sensor nach Anspruch 1, wobei für jedes Pixel die n aufeinanderfolgenden Auswahlen des Pixels während einer Auslesephase ($T_L$) nach der Pixelintegrationsphase ($T_I$) durchgeführt werden.

8. Sensor nach Anspruch 7, wobei sich der Quantisierungsschwellenwert über die Länge der Auslesephase ($T_L$) hinweg monoton ändert.

9. Sensor nach einem der Ansprüche 1 bis 8, wobei jedes Pixel (300) Folgendes aufweist:

    einen Reset-Transistor (303), dessen Ausleseknoten (FD) mit einem Pixel-Reset-Knoten (304) koppelt ist;
    einen Auslesetransistor (305), der als Folgequelle aufgebaut ist, dessen Gate mit dem Ausleseknoten (FD) verbunden ist und dessen Drain mit dem Rest-Knoten (304) verbunden ist; und
    einen Auswahltransistor (307), der die Source des Auslesetransistors (305) mit einer Ausgangsleitbahn (309) des Pixels koppelt.

10. Sensor nach Anspruch 9, wobei die Steuerschaltung konfiguriert ist, um während einer Bildaufnahmephase ($T_F$) für jedes Pixel (300) eine Pixelinitialisierungsphase ($T_R$) durchzuführen, die das Zurücksetzen des Ausleseknotens (FD) des Pixels auf eine erste Referenzspannung ($V_R$) aufweist, und zwar über die Ausgangsleiterbahn (309), den Auswahltransistor (307), den Auslesetransistor (305) und den Reset-Transistor (303) des Pixels.

11. Sensor nach Anspruch 10, wobei die Steuerschaltung konfiguriert ist, um das Pixel während der Initialisierungsphase ($T_R$) eines Pixels als Common-Source-Verstärker zu konfigurieren, durch Anlegen eines Vorspannungsstroms an den Pixel-Reset-Knoten (304) und Anlegen eines festen Bezugspotentials ($V_{CLref}$) an die Ausgangsleiterbahn (309) des Pixels.

12. Sensor nach Anspruch 10, wobei die Steuerschaltung konfiguriert ist, um während der Phase der Initialisierung ($T_R$) eines Pixels die folgenden aufeinanderfolgenden Schritte zu implementieren:

Initialisieren der Ausgangsleiterbahn (309) des Pixels auf ein Referenzpotential ($V_{CLref}$) und dann bringen der Ausgangsleiterbahn (309) auf einen Zustand hoher Impedanz;

Steuern des Reset-Transistors (303) und des Auswahltransistors (307) in den EIN-Zustand; und

Bringen des Pixel-Reset-Knotens (304) auf einen Zustand hoher Impedanz und Zwingen der Ausgangsleiterbahn (309) des Pixels auf das Referenzpotential ($V_{CLref}$).

**13.** Sensor nach einem der Ansprüche 9 bis 12, wobei jedes Pixel (300) ferner ein Transfer-Gate (301) aufweist, das in der Lage ist, den Transfer der photogenerierten Ladungen zwischen seiner Fotodiode (PD) und seinem Ausleseknoten (FD) zu steuern.

**14.** Sensor nach einem der Ansprüche 9 bis 13, wobei die Steuerschaltung eine periphere Ausleseschaltung (600) aufweist, die wenigstens einen Komparator (601) aufweist, und wobei jedes Pixel (300) seine Ausgangsleiterbahn (309) mit einem ersten Eingang (e1) des wenigstens einen Komparators (601) verbunden hat.

**15.** Sensor nach Anspruch 14 und nach Anspruch 2, wobei die Steuerschaltung konfiguriert ist, um für jede Auswahl eines Pixels (300) während einer Integrationsphase ($T_I$) des Pixels die folgenden Schritte zu implementieren:

a) Voraufladen der Ausgangsleiterbahn (309) des Pixels auf eine zweite Referenzspannung (REF1);

b) Anlegen einer dritten Referenzspannung (REF2), die größer als die zweite Referenzspannung (REF1) ist, an einen zweiten Eingang (e2) des wenigstens einen Komparators (601);

c) Einschalten des Pixelauswahltransistors (307); und

d) nach einer vorbestimmten Einschwingzeit ($\tau$) nach Schritt c), Auslesen des Ausgangswertes des Komparators (601).

**16.** Sensor nach einem der Ansprüche 1 bis 15, wobei die Pixel (300) in einer Anordnung aus Reihen und Spalten angeordnet sind, und wobei die Steuerschaltung in der Lage ist, die Pixel einer gleichen Reihe gleichzeitig zu steuern und die Pixel verschiedener Reihen gemäß einem Steuerverfahren des Rolling-Shutter-Typs nacheinander zu steuern.

**17.** Sensor nach einem der Ansprüche 1 bis 16, wobei der Quantisierungsschwellenwert einstellbar ist.

**18.** Vorrichtung, die den Sensor nach einem der Ansprüche 1 bis 17 sowie eine Schaltung zur fliegenden Verarbeitung der von der Sensorsteuerschaltung gelesenen Binärsignale ($B_{OUT}$) aufweist.

**19.** Vorrichtung nach Anspruch 18, wobei die Verarbeitungsschaltung in der Lage ist, für jede Abtastung aller Sensorpixel einen binären Eingangsvektor ($c^k$), der durch alle von der Steuerschaltung des Sensors gelesenen binären Signale für die verschiedenen Sensorpixel gebildet wird, mit einer Transformationsmatrix (G) zu multiplizieren.

**20.** Vorrichtung nach Anspruch 19, wobei die Verarbeitungsschaltung in der Lage ist, während aufeinanderfolgender Abtastungen aller Sensorpixel aufeinanderfolgende Ausgangsvektoren ($y^k$), die sich aus der Multiplikation der aufeinanderfolgenden Eingangsvektoren ($c^k$) mit der Transformationsmatrix (G) ergeben, zu integrieren.

**Claims**

**1.** An image sensor comprising:

- a plurality of pixels (300), each pixel comprising a photodiode (PD) and a sense node (FD) and being capable of supplying on its sense node (FD) an output signal ($V_{OUT}$) representative of a quantity of light energy received by its photodiode (PD) during a pixel integration phase ($T_I$); and

- a control circuit configured to, during a phase of acquisition ($T_F$) of an image, successively select each pixel (300) a number n of times without resetting the pixel between the first and the last selection of the pixel and, for each selection of a pixel, compare the output signal ($V_{OUT}$) of the pixel with a quantization threshold and read a binary signal ($B_{OUT}$) representative of the result of the comparison, the sequence of n binary signals thus obtained forming the pixel output value.

**2.** The sensor of claim 1, wherein, for each pixel, the n successive selections of the pixel are performed during a same pixel integration phase ($T_I$).

**3.** The sensor of claim 2, wherein the quantization threshold is constant all along the integration phase ($T_I$).

**4.** The sensor of claim 2 or 3, wherein the control circuit is configured so that the time interval between two successive selections of the pixel (300) is substantially constant all along the pixel integration phase ($T_I$).

**5.** The sensor of claim 2 or 3, wherein the control circuit is configured so that the time interval between two successive selections of the pixel (300) varies during the pixel integration phase ($T_I$).

6. The sensor of claim 5, wherein the control circuit is configured so that the time interval between two successive selections of the pixel (300) is inversely proportional to the rank of the selection from among the n successive selections of the pixel of the integration phase ($T_I$).

7. The sensor of claim 1, wherein, for each pixel, the n successive selections of the pixel are performed during a readout phase ($T_L$) following the pixel integration phase ($T_I$).

8. The sensor of claim 7, wherein the quantization threshold varies monotonously all along the readout phase ($T_L$).

9. The sensor of any of claims 1 to 8, wherein each pixel (300) comprises:

a reset transistor (303) coupling its sense node (FD) to a pixel reset node (304);
a readout transistor (305) assembled as a follower source, having its gate connected to the sense node (FD) and having its drain connected to the reset node (304); and
a selection transistor (307) coupling the source of the readout transistor (305) to an output conductive track (309) of the pixel.

10. The sensor of claim 9, wherein the control circuit is configured to, during an image acquisition phase ($T_F$), implement, for each pixel (300), a pixel initialization phase ($T_R$) comprising resetting the sense node (FD) of the pixel to a first reference voltage ($V_R$) via the output conductive track (309), the selection transistor (307), the readout transistor (305), and the reset transistor (303) of the pixel.

11. The sensor of claim 10, wherein the control circuit is configured to, during the initialization phase ($T_R$) of a pixel, configure the pixel as a common-source amplifier by applying a bias current to the pixel reset node (304) and by applying a fixed reference potential ($V_{CLref}$) to the output conductive track (309) of the pixel.

12. The sensor of claim 10, wherein the control circuit is configured to, during the phase of initialization ($T_R$) of a pixel, implement the successive steps of:

setting to a reference potential ($V_{CLref}$) the output conductive track (309) of the pixel and then setting to a high impedance state said output conductive track (309);

controlling the reset transistor (303) and the selection transistor (307) to the on state; and
setting to a high impedance state the pixel reset node (304) and forcing the output conductive track (309) of the pixel to the reference potential ($V_{CLref}$).

13. The sensor of any of claims 9 to 12, wherein each pixel (300) further comprises a transfer gate (301) capable of controlling the transfer of the photogenerated charges between its photodiode (PD) and its sense node (FD).

14. The sensor of any of claims 9 to 13, wherein the control circuit comprises a peripheral readout circuit (600) comprising at least one comparator (601), and wherein each pixel (300) has its output conductive track (309) connected to a first input (e1) of said at least one comparator (601).

15. The sensor of claim 14 and of claim 2, wherein the control circuit is configured to, for each selection of a pixel (300) during an integration phase ($T_I$) of the pixel, implement the steps of:

a) precharging the output conductive track (309) of the pixel to a second reference voltage (REF1);
b) applying a third reference voltage (REF2) greater than the second reference voltage (REF1) to a second input (e2) of said at least one comparator (601);
c) turning on the pixel selection transistor (307); and
d) after a predetermined settling time ($\tau$) after step c), reading the output value of the comparator (601).

16. The sensor of any of claims 1 to 15, wherein the pixels (300) are arranged in an array of rows and columns, and wherein the control circuit is capable of simultaneously controlling the pixels of a same row and of successively controlling the pixels of different rows according to a control method of rolling shutter type.

17. The sensor of any of claims 1 to 16, wherein said quantization threshold is adjustable.

18. A device comprising the sensor of any of claims 1 to 17, and a circuit of on-the-fly processing of the binary signals ($B_{OUT}$) read by the sensor control circuit.

19. The device of claim 18, wherein the processing circuit is capable, for each scanning of all the sensor pixels, of multiplying a binary input vector ($c^k$) formed by all the binary signals read by the control circuit of the sensor for the different sensor pixels, by a transformation matrix (G).

**20.** The device of claim 19, wherein the processing circuit is capable, during successive scannings of all the sensor pixels, of integrating successive output vectors ($y^k$) resulting from the multiplication of the successive input vectors ($c^k$) by the transformation matrix (G).

Fig 1

Fig 2A

Fig 2B

Fig 2C

Fig 3

Fig 4

Fig 5A    Fig 5B    Fig 5C

Fig 6

Fig 7

Fig 8

Fig 9

Fig 10

EP 3 319 311 B1

Fig 11

Fig 12

25

Fig 13

Fig 14

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6977685 B1

**Littérature non-brevet citée dans la description**

- **Z. IGNJATOVIC.** *Low-Power, High Dynamic Range CMOS Image Sensor Employing Pixel-level Oversampling $\Sigma\Delta$ Analog-to-Digital Conversion*